# EUROPEAN PATENT SPECIFICATION

(11) **EP 1 735 154 B1**
(45) Date of publication and mention of the grant of the patent: **17.05.2017**
(21) Application number: 05732281.0
(22) Date of filing: 05.04.2005
(51) Int. Cl.: B32B 27/30, B32B 27/36, C08J 5/00, B32B 7/12, B65D 65/40

(54) **MULTICOMPONENT STRUCTURES HAVING IMPROVED ADHESION BETWEEN COMPONENTS**
MEHRKOMPONENTENSTRUKTUREN MIT VERBESSERTER ADHÄSION ZWISCHEN KOMPONENTEN
STRUCTURES MULTICONSTITUANTS A ADHESION AMELIOREE ENTRE LES CONSTITUANTS

(30) Priority: 08.04.2004 US 560531 P
(43) Date of publication of application: 27.12.2006
(73) Proprietor: Dow Global Technologies LLC, Midland, MI 48674 (US)
(72) Inventor: LEE, Eric, K., Midland, MI 48642 (US); NAUMOVITZ, John, A., Auburn, MI 48611 (US); LADIKA, Mladen, Midland, MI 48642 (US)
(74) Representative: Beck Greener
(86) International application number: PCT/US2005/011824
(87) International publication number: WO 2005/100018

(56) References cited:
- EP-A- 0 435 787
- WO-A-02/31029
- US-A- 4 936 473
- US-A- 4 959 271
- US-A- 5 080 961

## Description

### Background of the invention

This invention relates to multicomponent structures; and more particularly to multicomponent structures having improved adhesion.

### Description Of The Prior Art

Multicomponent structures often offer advantages of different properties exhibited by the various components in the structure. Multicomponent structures include multilayer films in which different layers have specific characteristics as well as sheets, lidstock, and containers, for example, pouches, tubes and bags. In particular, there is a need for multicomponent structures, particularly multilayer films and structures including packaging useful in high temperature applications such as bags suitable for hot-fill or in which foodstuffs can be cooked either at the time of packaging or by the consumer, for example, immersion in hot water or exposure to steam. Such thermal processing often is referred to as cook-in, and films used in such processes are known as cook-in films.

A cook-in or hot-fill film is preferably capable of withstanding exposure to elevated temperature conditions suitable for cooking or filling for periods of time appropriated to cooking or filling without compromising its ability to contain the food product. This could range from brief contact with hot foods for filling to up to 12 hours in slow cooking conditions of 125 °C and greater, depending on the specific application. During such extended periods of time at elevated temperatures, a package formed from a cook-in film would preferably resist failure (that is, delamination or pulling apart either at seams or, especially, interfaces between layers).

Products such as foods are often oxygen, moisture or aroma sensitive. In such applications the multicomponent structures, preferably multilayer film structures containing the products need to include one or more oxygen, moisture or gas barrier layers. Preferably, these barrier layers include vinylidene chloride polymers which are known to provide excellent barrier properties.

Other properties of vinylidene chloride polymers, and often of other polymers involved in multicomponent structures, render interlayer adhesion between such polymers and polymers of many differing compositions difficult. For instance, those skilled in the art recognize that even in coextruded multilayer films having at least one vinylidene chloride polymer layer, that layer may not adhere sufficiently to polymers such as polyethylene especially when the multilayer films are exposed to elevated temperatures, or handling such as hot-fill or retort.

Intermediate layers between adjacent polymer layers are often used to improve adhesion, decrease delamination or both. These layers are referred to as tie layers or bonding layers. Sometimes tie layers contain blends of polymers, each compatible with an adjacent layer. Alternatively, a polymer which adheres to both adjacent layers is used. For instance, copolymers of ethylene with an ester monomer such as ethylene vinyl acetate (EVA) and ethylene methyl acrylate (EMA) have been used as tie layers between vinylidene chloride polymer layers and layers of other compositions such as ethylene polymers or propylene polymers. However, these tie layers may not provide sufficient adhesion at elevated temperatures. Failure can occur during the hot-fill operations, especially during the packaging operations when hot contents are in contact with the package. In retort applications, failure is more common while the package is heated near retort temperatures or during post-retort handling or processing steps. It would be desirable to increase the interlayer adhesion over that exhibited by these tie layers, preferably such that less delamination would occur after hot-fill, cook-in bag, or retort use.

### Summary of the Invention

In one aspect, the present invention includes a multicomponent structure comprising at least two components having a tie layer or adhesive layer directly between them, the tie layer comprising at least one olefin unsaturated ester copolymer and at least one photoinitiator and optionally a crosslinking enhancer. The tie layer is preferably irradiated with sufficient actinic radiation to result in increased interlayer adhesion strength between the two components as compared with the interlayer adhesion strength before treatment with the actinic radiatio n or between the components having a tie layer of the same composition except without the added photoinitiator or crosslinking enhancer. Without the photoinitiator, optionally crosslinking enhancer, and radiation the interlayer adhesion strength of the components is preferably less than 55 N/m measured at 93 °C according to the procedures of ASTM F904-98. At least one of the components (first component or layer) preferably comprises a halopolymer, more preferably vinylidene chloride polymer, most preferably at least a majority of a vinylidene chloride polymer. In another embodiment, at least one component exhibits interlayer adhesion strength similar to that of a vinylidene chloride polymer. The structure optionally is or comprises such structures as a multilayer film, bag, or package, a lined or composite pipe, or other structure having more than one component. The tie layer is irradiated with an amount of UV light effective to increase the adhesion strength between the first and second components.

In another aspect, the invention includes a tie layer composition comprising at least one olefin unsaturated ester copolymer and an effective amount of at least one photoinitiator directly between a first and a second component wherein the first component comprises a vinylidene chloride polymer (hereinafter PVDC component), which tie layer, after UV irradiation, increases the adhesion strength between the components measured at 93 °C at least 20 percent as compared with the same components having a tie layer of the same configuration and composition except without photoinitiator and irradiation.

In yet another aspect, the invention includes a multicomponent structure comprising at least two components, a first and a second component, having a tie layer directly between them, the tie layer comprising at least one olefin unsaturated ester copolymer and at least one photoinitiator, wherein at least the first component includes a majority of a vinylidene chloride polymer or combination of vinylidene chloride polymers (hereinafter PVDC component) wherein the structure has increased interlayer adhesion after irradiation with UV radiation as compared with the interlayer adhesion strength before treatment with the UV radiation.

In another aspect, the invention includes a multicomponent structure comprising at least two components, a first and a second component, having a tie layer directly between them, the tie layer comprising at least one olefin unsaturated ester copolymer and at least one photoinitiator wherein the components in the presence of the tie layer have an adhesion strength measured according to ASTM F904-98 at 93 °C of at least 50 N/m after the structure has been irradiated with UV radiation, as compared with an adhesion strength of less than 40 N/m for components and tie layer of the same composition except without the photoinitiator and irradiation.

In another aspect, the invention includes a multicomponent structure having: (a) at least one first polymer component comprising at least a majority of a halopolymer having an adhesion strength with the second component and tie layer in the substantial absence of photoinitiator and UV radiation measured according to ASTM F904-98 at 93 °C of less than 55 N/m; and directly adjacent to the first polymer component (b) at least one tie layer comprising at least one olefin unsaturated ester copolymer and at least one photoinitiator; and directly adjacent to the tie layer on the side opposite the first polymer component (c) at least one second component comprising at least one polymer, glass, silica, paper, metal, fabric or combination thereof.

In another aspect, the invention includes a film comprising a plurality of superimposed coextruded layers; the layers comprising a first layer and a second layer and directly between the first and second layers a third layer comprising a base polymer having at least one olefin unsaturated ester copolymer and at least one photoinitiator; wherein the first layer comprises at least a majority by weight of at least one vinylidene chloride copolymer and wherein the film is irradiated with sufficient UV actinic radiation to increase adhesion strength between the first and second layer as compared with the adhesion strength before irradiation.

In another aspect, the invention includes a method of cooking a food product comprising:
a) substantially completely surrounding the food product in the composition, structure, or film of any aspect of this invention to form a packaged food product; and
b) subjecting the packaged food product to an elevated temperature sufficient to cook the food product., wherein the film does not spontaneously delaminate after the step of subjecting the packaged food product to an elevated temperature.

In another aspect, the invention includes a method for adhering a first layer to a second layer in a film comprising a plurality of superimposed layers, the method comprising 1) coextruding a first layer, a second layer comprising at least 80 percent of a vinylidene chloride polymer, and directly between them a third layer comprising a base polymer having at least one olefin unsaturated ester copolymer and at least one photoinitiator 2) forming a film and 3) irradiating the film with UV light sufficiently to increase the adhesion strength between the first and second layers.

In another aspect, the invention includes an improvement in making a multilayer, heat shrinkable film having a first layer comprising a vinylidene chloride copolymer and a second layer comprising a polymer, the improvement comprising providing a tie layer directly between the first and second comprising at least one olefin unsaturated ester copolymer and at least one photoinitiator, and irradiating the tie layer to improve the adhesion between the first and second layers.

In another aspect, the invention includes a method for improving the adhesion between a first layer or structure comprising a vinylidene chloride polymer and a contiguous second layer or structure of the same or different composition, wherein the method includes interposing directly between the first and second layer a composition comprising at least one olefin unsaturated ester copolymer and at least one photoinitiator and irradiating the composition with sufficient UV radiation to increase the adhesion.

In another aspect, the invention includes the use of a composition comprising at least one olefin unsaturated ester copolymer and at least one photoinitiator as a tie layer directly between a first component and a second component which tie layer, after irradiation, increases the adhesion strength between the components from less than 40 N/m to greater than 55 N/m.

The invention also includes the use in place of the first component or layer comprising at least one vinylidene chloride polymer, a component or layer of a composition having interfacial adhesion strength such that the interlayer adhesion strength between it and the second layer or component on the other side of the tie layer composition comprising at least one olefin unsaturated ester copolymer and at least one photoinitiator is less than 40 N/m before irradiation and at least 50 N/m after UV irradiation particularly where the difference between adhesion strengths is at least 20 N/m.

In an alternative aspect, the invention is a multilayer film comprising: a) a first outer layer comprising a polymer comprising mer units derived from propylene; b) a second outer layer; and disposed between the first and second outer layers, c) a barrier inner layer comprising a polymer with a low permeance to oxygen and at least one tie layer between the barrier layer and at least one layer adjacent thereto; wherein the tie layer or layers comprise a base polymer having at least one olefin unsaturated ester copolymer and at least one photoinitiator; wherein the tie layer or layers are irradiated to the extent that the layers directly adjacent the tie layer or layers exhibit at least 50 percent fewer failures due to spontaneous delamination after commercial processing which involves exposure to temperatures of at least 65°C for a period of at least 1 minute as compared with a multilayer film of the same components and structure but without the photoinitiator or the irradiation. Hot fill and retort processes are examples of commercial processing. Preferably the temperature exposure is to at least 65 °C for at least 5 minutes or to at least 90 to 93 °C for at least 1 minute.

The compositions comprising an at least one olefin unsaturated ester copolymer and photoinitiator, crosslinking enhancer or combination thereof preferably do not additionally contain another unsaturated polymer, particularly a polyene because the unreacted double bond in these materials can adversely affect thermal stability of a tie layer composition during melt processing. The unsaturated polymer might form gels detrimental to the physical and optical properties of a film.

In each instance, the composition comprising at least one olefin unsaturated ester copolymer and at least one photoinitiator is preferably treated with sufficient actinic radiation, preferably UV light to result in increased interlayer adhesion strength between two components directly adjacent that composition as compared with the interlayer adhesion strength before treatment with the actinic radiation and alternatively or in combination as compared with the adhesion strength of a composition comprising the same base polymer or polymers but without the compound or compounds selected from photoinitiators and crosslinking enhancers either with or without irradiation. At least one of the components preferably comprises a vinylidene chloride polymer. In another embodiment, at least one component exhibits interlayer adhesion strength similar to vinylidene chloride polymers. Preferably the two components with a tie layer of an olefin unsaturated ester copolymer composition without a photoinitiator or crosslinking enhancer or with such compounds which have not been treated with sufficient actinic radiation to achieve enhanced interlayer adhesion strength have interlayer adhesion strength of less than 50 N/m, preferably less than 40 N/m, more preferably less than 35 N/m, most preferably less than 30 N/m, all measured at 93 °C.

In each embodiment of the invention, at least one photoinitiator is advantageously used in combination with at least one crosslinking enhancer.

### Detailed Description of the Invention

The following terms are used herein as defined below to aid in describing the invention and in the claims.

"Multicomponent structure" means a structure having at least two adjacent parts or components, often layers (which shall be used herein as exemplary of the parts or components). Adjacent components are affixed, that is for example bonded, welded, adhered or the like as contrasted with replaceably removable for example a lid on a container. Examples of multicomponent structures include multilayer films having at least two layers, laminated sheets having at least two layers, composite packaging having at least two layers, molded or shaped objects having at least two layers or shaped components bonded or adhered together. Preferred multicomponent structures include coextruded articles such as film, tubing, laminates such as film and sheet, and injection and blow molded articles.

"Actinic radiation" refers to radiation that produces chemical change. Such irradiation generally involves relatively short wave lengths and includes ultraviolet radiation, X-rays, and electron beam radiation. UV actinic radiation is used in the practice of the invention.

"Radiated" or "irradiated" means that the olefin unsatu rated ester copolymer, shaped or in the form of an article or film, was subjected to the source of UV actinic radiation sufficient to result in a chemical change, for example formation of a bond, or alternatively, having power of at least 1 watt/(meter²) incident on the above article, whether or not there is a measurable an increase in insoluble gel or other indication of crosslinking.

"Ultraviolet" or "UV" means radiation at a wavelength or a plurality of wavelengths in the range of from 150 to 700 nm which includes visible light, preferably 170 to 500 nm.

"Photoinitiator" means a chemical composition that, upon exposure to UV- radiation, generates radicals or species that can carry out hydrogen abstraction such as nitrenes, and carbenes without covalently bonding to the main polymer chain -

"Crosslinking enhancer" in the practice of this invention means a chemical composition that, in presence of a photoinitiator forms a covalent crosslink between two polymer chains. The crosslinking enhancer is also referred to herein as a photocrosslinker.

"Photoinitiator/crosslinker" means a chemical composition that upon exposure to UV-radiation generates a more reactive species (for example, free radical, carbene, and nitrene) that can form a covalent crosslink between two polyolefin chains.

"Film" refers to a sheet, non-woven or woven web or the like or combinations thereof, having length and breadth dimensions and having two major surfaces with a thickness therebetween. A film can be a monolayer film (having only one layer) or a multilayer film (having two or more layers). A multilayer film is composed of more than one layer (laminate, plies) preferably composed of at least two different compositions, advantageously extending substantially the length and breadth dimensions of the film. Layers of a multilayer film are usually bonded together by one or more of the following methods: coextrusion, extrusion coating, vapor deposition coating, solvent coating, emulsion coating, or suspension coating. A film, in most instances, has a thickness of up to 20 mils (5X 10⁻⁴ m).

"Layer" or "ply" means herein a member or component forming all or a fraction of the thickness of a structure wherein the component is preferably substantially coextensive with the structure and has a substantially uniform composition. In a monolayer film, the "film" and "layer" are one and the same.

"Extrusion," and "extrude," refer to the process of forming continuous shapes by forcing a molten plastic material through a die, followed by cooling or chemical hardening. Immediately prior to extrusion through the die, the relatively high- viscosity polymeric material is fed into a rotating screw, which forces it through the die.

"Coextrusion," and "coextrude," refer to the process of extruding two or more materials through a single die with two or more orifices arranged so that the extrudates merge and weld together into a laminar structure before cooling or chilling, that is, quenching. Coextrusion is often employed as an aspect of other processes, for instance, in film blowing, casting film, and extrusion coating processes.

"Crosslinked" or "crosslink" means the formation of chemical bonds directly or indirectly (via some chemical structural entity) between two or more of the molecular chains of polymers. While degrees of crosslinking are typically shown by a change in the melt flow index, as measured according to ASTM D-1238, with respect to uncrosslinked composition of the same type, or higher degrees of crosslinking are typically reported as gel fraction as measured according to ASTM-D-2765, in the practice of this invention, crosslinking may not be measurable in these ways. Crosslinking is believed to occur because a change occurs on exposure to UV radiation, which change seems consistent with light crosslinking. Use of the term crosslinking to describe this change is for convenience and to facilitate description. Crosslinking is merely the theorized explanation for increased interlayer adhesion. The invention is not limited changes in adhesion actually caused by crosslinking.

"Substituted" as used herein means the result of a chemical reaction in which one atom or group of atoms replaces another atom or group of atoms in the structure of a molecule. It especially refers to the substitution of a hydrogen atom, of a hydrogen-carbon moiety, with an alkyl, aryl, hydroxy, halogen, or other chemical substituent.

"Cook" means to heat a food product thereby effecting a change in one or more of the physical or chemical properties thereof (for example, color, texture, and taste).

"Cook-in" as used herein is intended to refer to packaging structurally capable of withstanding exposure to cook-in time- temperature conditions while containing a food product. Cook-in packaged foods are essentially pre-packaged, pre-cooked foods that go directly to the consumer a configuration to be consumed with or without warming. Cook-in time-temperature conditions typically refer to a long slow cook, for example submersion in water of at least 70 °C and preferably up to 80 °C for at least 4 hours, preferably up at least 6 hours, more preferably up to 12 hours. Such cook-in time-temperature requirements are representative of institutional cooking requirements. Under such conditions, a cook-in packaging advantageously maintains seal integrity and is delamination resistant.

"Hot-fill" refers to processes wherein hot materials are packaged. For instance, hot foods may be packaged in bags. The hot materials are commonly at temperatures of at least 65 °C, preferably at least 85 °C. Hot fill processes in most instances involve cooling immediately after contact with the hot materials or foods.

"Retorting" refers to exposure to temperatures of at least 100 °C, preferably at least 121 °C, for a period of time sufficient to cook, pasteurize, sterilize or otherwise heat treat material.

"Elevated temperature" or "high temperatures" to which a multicomponent structure of the invention may be exposed are those encountered in hot-fill, cook-in applications or retorting.

As a noun "laminate" refers to a multiple component structure having two or more parts, preferably layers, sheets or films bonded together by any suitable means, including adhesive bonding; reactive surface modification (for example, corona treatment, flame treatment, or plasma treatment); heat treatment; and pressure treatment, including combinations thereof.

As a verb, "laminate" means to affix or adhere (by means of, for example, adhesive bonding, pressure bonding, and corona lamination) two or more separately made film articles to one another so as to form a multilayer structure; as a noun, "laminate" means a product produced by the affixing or adhering just described.

"Delaminate," and "delaminates" refer generally to the internal separation of parts of a multicomponent structure, for example layers of a film or laminate. More often the terms refer more specifically, to the separation of a coextruded, multilayer film within a layer or at an inter-layer (that is, layer/layer) interface or both within the coextruded film when such film, or laminate of which the coextruded film is a component, is subjected to a peel force of sufficient magnitude. The terms " spontaneous delamination" and "spontaneously delaminate" refer to delamination without deliberate application of peeling force. Spontaneous delamination may occur, for instance, in the course of common commercial processing, for example hot fill or retort process or normal handling thereafter.

"Peel," and "peeling" refer generally to the act of removing one or more layers from a multilayer film by manually or mechanically grasping and pulling back the layers along a plane or interface of relatively low bond-strength or within a layer having relatively weak intra-layer cohesion.

"Peel force" refers to the amount of force applied to ply-separate two layers, or internally separate one layer or a combination thereof, of a multilayer film or laminate, as measured in accordance with ASTM F904-98.

"Adhesion strength" referred to as "peel-adhesion strength" and "interlayer adhesion strength" refer to the amount of force per area required to peel, delaminate or separate layers of a multilayer film, as measured according to the procedures of ASTM F904-98. For purposes of the present invention, measurement is at 93 °C, unless stated otherwise.

"Bond-strength" refers generally to the adhesive force with which two adjacent films, or two adjacent film layers, are connected. Bond-strength can be measured by the force required to separate two films or film layers that are connected, e. g., via a heat-weld, in accordance with ASTM F 88-94.

"Longitudinal direction" means that direction along the length of a film, that is, in the direction of the film as it is formed during extrusion, coating or both.

"Transverse direction" means that direction across the film and perpendicular to the machine direction.

"Directly adhered," as applied to film layers, means adhesion of the subject film layer to the object film layer, without a tie layer, adhesive, or other layer therebetween.

"Between," as applied to film layers, means that the subject layer is disposed in the midst of two object layers, regardless of whether the subject layer is directly adhered to the object layers or whether the subject layer is separated from the object layers by one or more additional layers.

"Oriented" or "stretch-oriented" refers to a polymer-containing material which has been stretched at an elevated temperature (the orientation temperature), followed by being "set" in the stretched configuration by cooling the material while substantially retaining the stretched dimensions. A material can be stretched in one direction (uniaxial orientation), two directions (biaxial orientation), or multiple directions. Biaxial orientation typically occurs in two directions which are perpendicular to one another, such as the longitudinal direction and the transverse direction.

"Seal" (noun) means a bond of a first region of a film surface or component surface to a second region of a film surface or component surface (or opposing surfaces). In heat sealing, it is created by heating (for example, by means of a heated bar, hot wire, hot air, infrared radiation, and ultrasonic sealing) the regions (or surfaces) to at least their respective softening points;

"Heat- seal" (also known as a "heat- weld") refers to the union of two films by bringing the films into contact, or at least close proximity, with one another and then applying sufficient heat and pressure to a predetermined area (or areas) of the films to cause the contacting surfaces of the films in the predetermined area to become molten and intermix with one another, thereby forming an essentially inseparable bond between the two films in the predetermined area when the heat and pressure are removed therefrom and the area is allowed to cool.

"Permeance" (in the packaging industry, "permeance" often is referred to as "transmission rate") means the volume of a gas (for example, O₂) that passes through a given cross section of film (or layer of a film) at a particular temperature and relative humidity when measured according to a standard test such as, for example, ASTM D 1434 or D 3985.

"Barrier layer" means a film layer with a low permeance toward one or more gases (for example, oxygen, water vapor, odor, preferably oxygen).

"Inner layer" means a layer of a film having each of its principal surfaces directly adhered to one other layer of the film.

"Outer layer" means a layer of a film having less than both of its principal surfaces directly adhered to other layers of the film.

"Inside layer" means the outer layer of a film in which a product is packaged that is closest, relative to the other layers of the film, to the packaged product.

"Outside layer" means the outer layer of a film in which a product is packaged that is farthest, relative to the other layers of the film, from the packaged product.

"Abuse layer" means an outer layer, an inner layer or both, that resists abrasion, puncture, and other potential causes of reduction of package integrity, appearance quality or a combination thereof.

"Tie layer" or "adhesive layer" means an inner layer having a primary purpose of providing interlayer adhesion to adjacent layers. The tie layer may also impart other characteristics to the multicomponent structure of which it is a part.

"Bulk layer" means any layer which has the purpose of increasing the abuse resistance, toughness, modulus, orientability, etc., of a multi- layer film and preferably comprises polymers that are inexpensive relative to other polymers in the film.

"Seal layer" (or "sealing layer" or "heat seal layer" or "sealant layer") means the outer layer(s) involved in the sealing of the film to itself, another layer of the same or another film, another article which is not a film or a combination thereof.

"Fabric substrate" is herein intended to be a general term encompassing any fabricated natural or synthetic material, whether woven, nonwoven, spunbonded, wet or dry laid, knitted, needled punched, felted, or otherwise constructed. For example, the fabric may be selected from the group consisting of nylon, cotton, polypropylene, PBI (polybenzimidazole), hemp, cellulose, silk, polyester, viscose, acrylic, acetate, flax, fiberglass, wool, polyethylene, aramid, rayon, jute, manila, NOMEX™ material, and blends thereof.

"Polymer" means the polymerization product of one or more monomers and is inclusive of homopolymers as well as interpolymers, copolymers, terpolymers, tetrapolymers, etc., and blends and modifications of any of the foregoing.

"Mer unit" means that portion of a polymer derived from a single reactant molecule; for example, a mer unit from ethylene has the general formula --CH₂CH₂---.

"Homopolymer" means a polymer consisting essentially of a single type of repeating mer unit.

"Interpolymer" or "Copolymer" refers to a polymer that includes mer units derived from at least two reactants (normally monomers) and is inclusive of random, block, segmented, graft, etc., copolymers, as well as terpolymers, and tetrapolymers. In this invention, the terms copolymer and interpolymer are used for polymers believed to be random copolymers unless stated otherwise.

"Olefin" refers to aliphatic (optionally branched), alicyclic and aromatic compounds having one or more double bonds. Representative olefins include ethylene, propylene, 1-butene, 1-hexene, 1-octene, 4- methyl-1-pentene, butadiene, cyclohexene, dicyclopentadiene, styrene, toluene, and α-methylstyrene. Aliphatic monounsaturated olefins are preferred and have the general formula CₙH₂ₙ, such as ethylene, propylene, and butene.

"Polyolefin," or "olefin polymer" means a thermoplastic polymer derived from one or more olefins. The polyolefin can bear one or more substituents, for example, a functional group such as a carbonyl, sulfide, etc. In a polyolefin some mer units are derived from an olefinic monomer which can be linear, branched, cyclic, aliphatic, aromatic, substituted, or unsubstituted (for example, olefin homopolymers, copolymers of two or more olefins, copolymers of an olefin and a non- olefinic comonomer such as a vinyl monomer). The term refers preferably to ethylene and propylene polymers and copolymers, and to polymeric materials having at least one aliphatic olefinic comonomer, such as ethylene vinyl acetate copolymer and ionomer. Polyolefins can be linear, branched, cyclic, aliphatic, aromatic, substituted, or unsubstituted. Included in the term polyolefin are homopolymers of an olefin, copolymers of olefins, copolymers of an olefin and a non-olefinic comonomer copolymerizable with the olefin, such as vinyl monomers, modified polymers of the foregoing. Modified polyolefins include modified polymers prepared by copolymerizing the homopolymer of the olefin or copolymer thereof with an unsaturated carboxylic acid, for example, maleic acid, fu maric acid or the like, or a derivative thereof such as the anhydride, ester metal salt or the like. They also include polyolefins obtained by incorporating into the olefin homopolymer or copolymer, an unsaturated carboxylic acid, for example, maleic acid, fumaric acid or the like, or a derivative thereof such as the anhydride, ester metal salt or the like.

"Ethylene/alpha-olefin copolymer" designates copolymers of ethylene with one or more comonomers selected from C₃ to C₂₀ alpha-olefins, such as 1-butene, 1- pentene, 1- hexene, 1-octene, and methyl pentene. Included are polymer molecules comprising long chains with relatively few side chain branches obtained by low pressure polymerization processes and the side branching that is present is short compared to non-linear polyethylenes (for example, LDPE, a low density polyethylene homopolymer). Ethylene/alpha-olefin copolymers generally have a density in the range of from 0.86 g/cc to 0.94 g/cc. The term linear low density polyethylene (LLDPE) is generally understood to include that group of ethylene/alpha-olefin copolymers which fall into the density range of 0.915 to 0.94 g/cc. Sometimes linear polyethylene in the density range from 0.926 to 0.94 is referred to as linear medium density polyethylene (LMDPE). Lower density ethylene/alpha- olefin copolymers may be referred to as very low density polyethylene (VLDPE, often used to refer to the ethylene/butene copolymers available from Union Carbide Corporation with a density ranging from 0.88 to 0.91 g/cc) and ultra-low density polyethylene (ULDPE, typically used to refer to certain ethylene/octene copolymers supplied by the Dow Chemical Company). Ethylene/alpha-olefin copolymers are the preferred polyolefins in the practice of the invention.

The phrase "ethylene/alpha-olefin copolymer" also includes homogeneous polymers such as metallocene-catalyzed EXACT™ linear homogeneous ethylene/alpha-olefin copolymer resins commercially available from the Exxon Chemical Company, of Baytown, Tex.; TAFMER™ linear homogeneous ethylene/alpha- olefin copolymer resins commercially available from the Mitsui Petrochemical Corporation; and long-chain branched, metallocene- catalyzed homogeneous ethylene/alpha-olefin copolymers commercially available from The Dow Chemical Company, for instance, known as AFFINITY™ resins. The phrase "homogeneous polymer" refers to polymerization reaction products of relatively narrow molecular weight distribution and relatively narrow composition distribution. Homogeneous polymers are structurally different from heterogeneous polymers (for example, ULDPE, VLDPE, LLDPE, and LMDPE) in that homogeneous polymers exhibit a relatively even sequencing of comonomers within a chain, a mirroring of sequence distribution in all chains, and a similarity of length of all chains, that is, a narrower molecular weight distribution. Furthermore, homogeneous polymers are most often prepared using metallocene, or other single-site type catalysts, rather than using Ziegler-Natta catalysts. Such single-site catalysts typically have only one type of catalytic site, which is believed to be the basis for the homogeneity of the polymers resulting from the polymerization.

"(Meth)acrylic acid" means acrylic acid, methacrylic acid or a combination thereof. "(Meth)acrylate" means acrylate, methacrylate or a combination thereof. "Ethylene alkyl acrylate copolymer" (EAA) is used herein to define a copolymer formed from ethylene and alkyl acrylate comonomers wherein the ethylene derived units in the copolymer are present in major amounts, and the alkyl groups include C₁-C₁₆ alkyl groups, preferably ethyl, methyl and butyl groups.

"Polyene" means a compound, possibly useful as a monomer, comprising any unsaturated aliphatic or alicyclic compound containing at least four carbon atoms in a chain and having at least two carbon-carbon double bonds in a carbon chain. While a polyene is optionally substituted, at least two carbon-carbon double bonds in the compound are not separated by a carbon-nitrogen or carbon-oxygen multiple bond or a heteroatom. Thus, while butadiene is a polyene, triallyl cyanurate and vinyl acrylate are not.

LLDPE is an abbreviation for linear low density polyethylene and refers to copolymers of ethylene having: (1) a higher-alpha-olefin such as butene, octene, hexene, etc. as a comonomer; (2) a density of from 0.910 to as high as 0.935 grams per cubic centimeter; (3) molecules comprising long chains with few or no branches or cross-linked structures; and, (4) being produced at low to medium pressures by copolymerization using heterogeneous catalysts based on transition metal compounds of variable valance.

VLDPE is an abbreviation for very low density polyethylene and refers to copolymers of ethylene having: (1) a greater proportion of higher alpha-olefin as a comonomer, in general, than LLDPE; (2) a density of 0.910 to 0.86 or lower; (3) little low temperature embrittlement; and, (4) then produced by a catalytic, low pressure process at a pressure of no greater than 7,000 KPA.

PVDC refers to copolymers of vinylidene chloride in which the vinylidene chloride monomer comprises at least 51 percent of the copolymer. Generally, PVDC is desirable as a layer in multi-layer thermoplastic film constructions because of its oxygen barrier properties.

EVA refers to copolymers of ethylene and vinyl acetate. The vinyl acetate content may range from a low of 2 or 3 percent to a high of 40 or 50 percent depending upon the desired properties.

EBA refers to ethylene/butyl-acrylate copolymer and the butyl- acrylate monomer content varies from as low as 2 percent to 25 percent or higher by weight.

EMA refers to copolymers of ethylene and methyl acrylate. The vinyl acetate content ranges from 2 or 3 percent to 30 or 40 percent depending upon the desired properties.

EEA refers to copolymers of ethylene and ethyl acrylate. Typically, the ethyl acrylate ranges from 2 to 3 percent to 20 to 25 percent depending on the desired properties.

All percentages, preferred amounts or measurements, ranges and endpoints thereof herein are inclusive, that is, "less than 10" includes 10.

### Vinylidene Chloride Polymer:

Multicomponent structures and multilayer films of the invention preferably have at least one component or layer comprising at least one vinylidene chloride polymer. The vinylidene chloride polymer or polymers advantageously comprise a majority, preferably at least 51 weight percent, more preferably at least 80, most preferably at least 90 weight percent of the component or layer.

Vinylidene chloride polymers (also known as vinylidene chloride resins, interpolymers of vinylidene chloride, vinylidene chloride interpolymers, copolymers of vinylidene chloride, and PVDC) are well-known in the art. See, for example, U.S. Patents 3,642,743 and 3,879,359. PVDC resins known as Saran™ resins, manufactured by The Dow Chemical Company are commercially available, as are many other types of vinylidene chloride interpolymers such as PVDC resins supplied by Kureha Chemical Industry Co. Ltd of Japan. As used herein, the term "interpolymer of vinylidene chloride," vinylidene chloride interpolymer" or "PVDC" encompasses copolymers, terpolymers, and higher polymers wherein the major component is vinylidene chloride and the remainder is one or more mono-ethylenically unsaturated monomer copolymerizable with the vinylidene chloride monomer such as vinyl chloride, alkyl acrylates, alkyl methacrylates, acrylic acid, methacrylic acid, itaconic acid, acrylonitrile, and methacrylonitrile. For use in the practice of the invention, an interpolymer of vinylidene chloride and vinyl chloride or vinylidene chloride and an alkyl acrylate or alkyl methacrylate, is preferred. The interpolymer optionally contains one or more other unsaturated monomers as previously described, preferably in amounts less than the amount of vinyl chloride, alkyl acrylate or alkyl methacrylate (on a weight basis). Such interpolymers, especially those having vinylidene chloride and vinyl chloride are suitable for mono-layer film formation in a blown film process. In contrast, vinylidene chloride interpolymers not having vinyl chloride comonomers often have adjacent layers of film for commercial film formation and are preferred for practice of the invention.

Preferably, the vinylidene chloride interpolymer is formed from a monomer mixture comprising a vinylidene chloride monomer advantageously in an amount of at least 50, more advantageously at least 60, preferably at least 75, more preferably at least 80, and most preferably at least 90 weight percent, advantageously up to 99.9, preferably up to 98 weight percent and the mono-ethylenically unsaturated comonomer in an amount advantageously at least 0.1, preferably at least 3, more preferably at least 5, most preferably at least 10 weight percent and advantageously up to 50, preferably less than or equal to 40, more preferably less than or equal to 25 weight percent based on total weight of the vinylidene chloride interpolymer.

A variety of additives within the skill in the art are optionally incorporated into the vinylidene chloride interpolymer composition. Additive type and amount will depend upon several factors. One such factor is the intended use of the composition. A second factor is tolerance of the composition for the additives. That is, amount of additive that can be added before physical properties of the blends are adversely affected to an unacceptable level. Other factors are apparent to those skilled in the art of polymer formulation and compounding.

Exemplary additives include plasticizers, heat stabilizers, pigments, processing aids, lubricants, fillers, and antioxidants. Each of these additives is within the skill in the art and several types of each are commercially available. Preferably, the vinylidene chloride polymer composition contains only additives commonly used such as the listed types.

Exemplary lubricants include fatty acids, such as stearic acid; esters, such as fatty esters, wax esters, glycol esters, and fatty alcohol esters; fatty alcohols, such as n-stearyl alcohol; fatty amides, such as N,N'-ethylene bis stearamide; metallic salt of fatty acids, such as calcium stearate, and magnesium stearate; and polyolefin waxes, such as paraffinic, and oxidized polyethylene. Paraffin and polyethylene waxes and their properties and synthesis are described in 24 Kirk-Othmer Encyc. Chem. Tech. 3rd Ed., Waxes, at 473-77 (J. Wiley & Sons 1980), which is incorporated herein by reference.

Additives are conveniently incorporated into the vinylidene chloride interpolymer composition using any mixing process that does not have substantial adverse effects on the interpolymer or additives, preferably dry blending techniques, alternatively melt blending or other means within the skill in the art.

In a multilayer film a PVDC layer advantageously has a thickness at least 2 microns (2X10⁻⁶ m), preferably at least 4 microns (4X10⁻⁶ m), more preferably at least 5 microns (5X10⁻⁶ m) to achieve barrier properties.

While a problem addressed by this invention generally concerns improving the adhesion of vinylidene chloride polymers, the invention is applicable to other materials in a multicomponent structure that may display less than desirable adhesion, especially under conditions of elevated temperatures. It is particularly applicable to other materials or combinations of materials that exhibit a peel or adhesion strength similar to or less than that of the vinylidene chloride polymers adjacent to LLDPE. Advantageously, the two components with a tie layer of an olefin unsaturated ester copolymer composition (either without a photoinitiator or crosslinking enhancer or with such compounds but not treated with sufficient actin ic radiation to achieve enhanced interlayer adhesion strength or both) have interlayer adhesion strength of less than 55, preferably less than 50, preferably less than 40, more preferably less than 35, most preferably less than 30 N/m. More specifically, when the tie layer is the copolymer of an olefin and an alkyl ester of an unsaturated acid, the interlayer adhesion is advantageously less than 55, preferably less than 50, more preferably less than 40 N/m. When the tie layer is a copolymer of an olefin and the ester of an unsaturated alcohol and saturated acid, the adhesion is advantageously less than 40, preferably less than 35, more preferably less than 30, most preferably less than 25 N/m, all as measured at 93 °C. While this invention has been exemplified in terms of vinylidene chloride polymers, it is similarly applicable, for instance, to other polymeric materials. These other polymers include halopolymers, polyolefins, polyesters, polyamides, polycarbonates, or a combination thereof which also exhibit insufficient adhesion under certain circumstances. Other halogen-containing polymers, referred to herein as halopolymers such as poly(chlorotrifluoroethylene) homopolymers and copolymers, ethylene chlorotrifluoroethylene copolymer, ethylene tetrafluoroethylene copolymer, fluorinated ethylene-propylene copolymer, perfluoroalkoxy polymer, poly(vinylidene fluoride), poly(vinyl fluoride), poly(vinyl chloride), polychlorotrifluoroethylene (PCTFE), copolymers or blends of tetrafluoroethylene, copolymers or blends of vinylidene chloride or fluoride, copolymers or blends of vinyl chloride or fluoride, and blends of two or more of the foregoing, on occasion exhibit adhesion problems that are remedied by application of the invention. Preferred halopolymers include preferably polyvinyl chloride (PVC) or polychlorotrifluoroethylene (PCTFE) as well as the copolymers of vinylidene chloride previously described and referred to herein as polyvinylidene chloride or PVDC and combinations thereof.

### Polyolefin unsaturated ester polymer

In the practice of the invention, the interlayer adhesion of components is increased using a composition comprising at least one olefin unsaturated ester copolymer and at least one photoinitiator, optionally with at least one crosslinking enhancer.

The olefin unsaturated ester copolymer is a copolymer or interpolymer comprising at least one olefin monomer and at least one monomer which is an ester and has unsaturation, preferably at least one double bond interpolymerizable with the olefin monomer or monomers. The ester is preferably a carboxylic acid ester and is referred to herein as an unsaturated ester. Either the acid moiety or the alcohol moiety of the ester is optionally unsaturated, or both. Examples of unsaturated esters wherein the acid moiety is unsaturated include acrylates and methacrylates. These esters are preferably alkyl esters such as methyl acrylate, ethyl acrylate, and butyl acrylate. Examples of unsaturated esters wherein the alcohol moiety is unsaturated include vinyl esters, such as vinyl acetate as well as vinyl propionate, vinyl butyrate, vinyl hexanoate.

Copolymers of olefins and alkyl esters of unsaturated carboxylic acids are known in the art and commercially available such as the ethylene methyl acrylate copolymers and ethylene butyl acrylate copolymers commercially available from Eastman Chemical Company under the trade designations EMAC, EMAC+, EBAC and EBAC+ with numeric designations beginning with the letters SP, such as SP 2255, SP2258, SP2205, SP1400, SP 1307, and SP 1903, copolymers of ethylene and methyl acrylate commercially available from Gulf Oil and Chemicals Co. under the trade designation POLY-ETH 2205 EMA, ethylene ethyl acrylate (EEA) commercially available from The Dow Chemical Company under trade designations such as EA 100, EA 101, and EA 103, and ethylene methacrylic acid ionomers commercially available from DuPont under the trade designation SURYLN; ethylene/acrylic acid copolymers; and maleic anhydride modified polyolefins and copolymers of polyolefins, commercially available from Mitsubishi Chemical Company under the trade designation MODIC resins. Preferred olefins are alpha olefins, that is, ethylenically unsaturated compounds having a single double bond in the alpha or first position. Of the alpha olefins, preferably C₂-C₂₀, more preferably C₂-C₁₀ alpha olefins; ethylene is most preferred; other preferred alpha olefins include propylene, 1-butene, 1-pentene, 1- hexene, 1-heptene, and 1-octene. Among effective alkyl esters of unsaturated carboxylic acids, the alkyl esters of acrylic and methacrylic acid are preferred, with acrylates more preferred. Of the alkyl esters, straight chain alkyl groups are preferred, with sizes of C₁ to C₂₀ preferred, C₁ to C₄ alkyl groups more preferred, and methyl, ethyl, or butyl groups most preferred, and ethyl or methyl groups even more preferred, in each instance inclusive of combinations thereof. The copolymers are optionally, but not preferably, terpolymers or higher polymers, having up to 30, advantageously less than 20, preferably less than 10, more preferably less than 5, most preferably less than 3 weight percent of at least one other ethylenically unsaturated monomer interpolymerized therewith. These optional monomers include styrene, acrylonitrile, methyl methacrylate, acrylic acid, methacrylic acid, and vinyl acetate. Methyl acrylate is the most preferred alkyl ester. The copolymer advantageously has at least 1, more preferably at least 20 weight percent alkyl ester based on total weight of the copolymer of olefin and alkyl ester of unsaturated carboxylic acid. While up to 50 weight percent or more alkyl ester is useful, more preferably less than or equal to 40, most preferably less than 30 weight percent alkyl ester is present in the copolymer to achieve desired bond or adhesion strength.

Copolymers of olefins and carboxylic acid esters of unsaturated alcohol moieties are known in the art and commercially available such as the ethylene vinyl acetate copolymers commercially available from DuPont under the trade designation ELVAX series and commercially available from Quantum Chemical Corp. under the trade designation ULTRATHENE series and the carboxylated ethylene/vinyl acetate copolymers, commercially available from DuPont under trade designations such as CXA 3101. Preferred olefins are alpha olefins, that is, ethylenically unsaturated compounds having a single double bond in the alpha or first position. Of the alpha olefins, preferably C₂-C₂₀, more preferably C₂-C₁₀ alpha olefins; ethylene is most preferred; other alpha olefins include propylene, 1-butene, 1-pentene, 1- hexene, 1-heptene, and 1-octene. Among effective carboxylic acid esters of unsaturated alcohols, the esters of C₂-C₂₀ carboxylic acids are preferred, with acetates and butyrates more preferred. Of the unsaturated esters, straight chain unsaturated groups are preferred, with sizes of C₃ to C₂₀ preferred, C₃ to C₄ groups more preferred and vinyl groups most preferred. Examples include vinyl acetate, vinyl propionate, and vinyl hexanoate. The copolymers are optionally, but not preferably, terpolymers or higher polymers, having up to 30, advantageously less than 20, preferably less than 10, more preferably less than 5, most preferably less than 3 weight percent of at least one other ethylenically unsaturated monomer interpolymerized therewith. These optional monomers include styrene, acrylonitrile, methyl methacrylate, acrylic acid, methacrylic acid, and vinyl acetate. Methyl and ethyl acrylates are the most preferred alkyl esters. The copolymer advantageously has at least 1, more preferably at least 10 weight percent unsaturated ester based on total weight of the copolymer of olefin and unsaturated ester of unsaturated carboxylic acid. While up to 50 weight percent or more alkyl ester is useful, more preferably less than or equal to 40, most preferably less than 30 weight percent alkyl ester is present in the copolymer to achieve desired bond or adhesion strength.

The preferred olefin unsaturated acid copolymer having unsaturated alcohol moiety is ethylene vinyl acetate (EVA). Preferred EVA's are those having a higher vinyl acetate (VA) content, typically greater than 12 weight percent. EVA'S having higher VA content tend to yield EVA layers having increased adhesion to for example, the vinylidene chloride copolymer layer. Thus, higher VA contents, in the range of at least 12 percent, preferably at least 18, percent (by weight) vinyl acetate are preferred. The vinyl acetate content is advantageously less than or equal to 40 weight percent. A melt index of less than 6 is also preferred.

The olefin unsaturated ester copolymers are optionally, but not preferably, modified by introduction of adhesive functional groups such as maleic anhydride, hydroxyl functionality, and alkoxy silane functionality. Examples of modified olefin unsaturated ester copolymers include maleic an hydride-modified EVA commercially available from DuPont under the trade designation Bynel, glycidyl functionally-modified EVA commercially available from DuPont under the trade designation Elvaloy, glycidyl-modified ethylene acrylate polymers commercially available from Atofina under the trade designation Lotader, and experimental alkoxyl-silane modified ethylene methyl acrylate resins commercially available from DuPont under the trade designation Elvaloy.

Blends of the unsaturated ester copolymers are also suitable for use in the practice of the invention. Useful bends include those of polymers having different monomer identities, as well as those having the same monomers in different proportions or having differences in at least one characteristic such as molecular weight, melt index, or other property. Any of the unsaturated ester copolymers are optionally used when blended with another unsaturated ester copolymer in any compatible proportion. For instance, blends of EVA and at least one of EMA, EEA, EBA or another EVA of different composition, molecular weight, melt index or other property are effective in the practice of the invention. Ratios are determined without undue experimentation by those skilled in the art, which artisans recognize that compatibility and effectiveness in each particular application considering such factors as adjacent layers, other purposes the layers may serve and conditions to which the layers are exposed. For instance equal portions of the blended polymers are among the effective blends. Similarly, the unsaturated ester copolymers are optionally blended with polymers which are not unsaturated ester copolymers. In such blends an additional important factor is the concentration of unsaturated ester, for example acrylate or vinyl acetate. The amounts of unsaturated ester in the blend are preferably those amounts preferred in each unsaturated ester when used alone. For instance, where EVA, EEA or EMA used alone preferably contains at least 12 percent by weight vinyl acetate or acrylate ester, a blend of one or more of those polymers with a polymer not containing unsaturated ester would preferably contain 12 percent by weight vinyl acetate or acrylate ester, obtained, for instance, blending a unsaturated ester copolymer containing a higher weight percent unsaturated ester with the other polymer. For instance, 33 weight percent polyethylene, for example LDPE, can be blended with 67 weight percent EVA containing 18 weight percent vinyl acetate to obtain a blend having 12 weight percent vinyl acetate.

In one preferred embodiment the tie layer includes at least two olefin unsaturated ester copolymers having different molecular weights, referred to herein as a higher and a lower molecular weight, although more than two such copolymers of differing molecular weights are optionally present and each molecular weight often, in reality, represents a collection of molecular weights. The different polymers are preferably compatible, and more preferably either both olefin unsaturated acid copolymers or both olefin carboxylic acid esters of unsaturated alcohol copolymers, preferably both olefin unsaturated acid copolymers, most preferably both selected from EMA, EBA and EEA copolymers. For convenience, rather than refer to a measured molecular weight, the melt index determined according to the procedures of ASTM D-1238 using a temperature of 190 °C and a weight of 2.16 kg is used to indicate relative molecular weights. At least among similar polymers, a polymer with a higher melt index (MI, also referred to as I₂) is understood by those skilled in the art to have a lower molecular weight. The polymer of highest molecular weight, lowest melt index, is advantageously sufficient to increase chain entanglement, crosslinking, or both preferably having a melt index of less than 2 g/10 min, more preferably less than 1 g/10 min, most preferably less than 0.6 g/10 min, and advantageously is not of sufficiently high molecular weight to present difficulties in melting the polymer blend at temperatures frequently encountered in making multicomponent structures and particularly at temperatures deleterious to vinylidene chloride polymers as used in the practice of the invention, preferably having a melt index greater than 0.1 g/10 min, more preferably greater than 0.3 g/10 min. The lowest molecular weight polymer, having highest melt index, is advantageously of sufficiently low molecular weight to provide good coextrusion flow with the other polymer layers, preferably having a melt index of less than 10 g/10 min, more preferably less than 6 g/10 min, most preferably less than 3 g/10 min, and is less than the molecular weight of the highest molecular weight component, advantageously having a melt index of at least 0.5 g/10 min, preferably at least 1.5 g/10 min, more preferably at least 1.0 g/10 min and most preferably at least 2.0 g/10 min. The highest and lowest molecular weights preferably differ in melt index by at least 1 g/10 min, more preferably at least 2 g/10 min, preferably less than 8 g/10 min, more preferably by less than 6 g/10 min, and most preferably by less than 4 g/10 min. The components of differing molecular weights advantageously are combined in amounts which provide improved adhesion compared to the high melt index fraction alone, but can still be successfully coextruded without flow problems experienced with the low melt index fraction alone. The highest molecular weight polymer (lowest melt index) is advantageously present in an amount of at least 10 weight percent, preferably at least 20 weight percent, more preferably at least 30 weight percent, and advantageously less than 60 weight percent, preferably less than 50 weight percent, more preferably less than 40 weight percent of the combination of unsaturated ester copolymers. These copolymer blends are believed to result in an improved adhesion strength as compared with the lower molecular weight component alone and improved processing as compared with the higher molecular weight component alone, preferably improved adhesion strength as compared with either (or any) component alone even when used without the photoinitiator and, optionally, crosslinking enhancer as taught herein.

Advantageously, the olefin unsaturated ester copolymer is selected for its processability, that is ease of extrusion under conditions commonly used in the industry and width of temperature window in which extrusion can take place. Its melt processability is enhanced by using copolymers of an olefin and alkyl ester of an unsaturated carboxylic acid having a melt index (in the case of a mixture of unsaturated ester copolymers a simple arithmetic average of melt indexes) of at least 0.1, preferably 0.5, more preferably at least 1, and advantageously less than 500, preferably less than 10, more preferably less than 6, most preferably 2, for example in the range of 1.5 to 2.5 g/10 min. Melt index is determined according to the procedures of ASTM D-1238 using a temperature of 190 °C and a weight of 2.16 kg.

The thickness of an olefin unsaturated ester layer is advantageously at least 2, preferably at least 3, more preferably at least 5, and most preferably at least 7 percent, advantageously up to 50, preferably to 30, more preferably to 20, still more preferably to 15, and most preferably to 10 percent (inclusive), of the total thickness of the multilayer film. Each bonding layer may have a thickness in the range of from 1 to 15 microns, and is preferably selected from the group consisting of ethylene vinyl acetate, ethylene methyl acrylate, ethylene ethyl acrylate, ethylene butyl acrylate, and combinations thereof.

The olefin unsaturated ester copolymers are optionally used with additives within the state of the art. Those skilled in the art will recognize that some such additives could interfere with the practice of the invention especially if used in large amounts. The identities and amounts that might interfere differ with the identities and amounts of the polymers, photoinitiators and cross-linking enhancers used. Determining interference and avoiding it is within the skill in the art without undue experimentation. Significant interference is preferably avoided.

### Photoinitiators

The compositions involved in the present invention include one or more photoinitiators, and the compositions optionally also include one or more crosslinking enhancers.

Examples of useful photoinitiators include aromatic ketones, aromatic monoacetals of 1,2-diketones, aromatic α-hydroxy ketones, quinones, organic peroxides, azo compounds, nitroso compounds, acyl halides, hydrazones, mercapto compounds, pyrylium compounds, triacylimidazoles, acylphosphine oxides, bisimidazoles, chloroalkyltriazines, benzoin ethers, benzil ketals, thioxanthones, and mixtures thereof.

The preferred photoinitiators used in the practice of the invention are aromatic ketones or monoacetals of 1,2-diketones. There are two mechanisms of photoinitiation with these photoinitiators. In the case of aromatic ketones, where the carbonyl functionality is linked to one or two aromatic groups, the carbonyl group is upon exposure to UV radiation excited into a triplet state. Such excited carbonyl group can abstract a hydrogen atom from a polymer chain and generate a radical site on a polymer. Recombination of free radicals from separate polymer chains is believed to result in a covalent crosslinking. On the other hand, the primary photoreaction of the monacetals is believed to be homolytic bond cleavage to give acyl and dialkoxyalkyl or dialkoxyaryl radicals known as a Norrish Type I reaction. Those mechanisms of photoinitiation are more fully described in W. Horspool and D. Armesto, Organic Photochemistry: A Comprehensive Treatment, Ellis Horwood Limited, Chichester, England, 1992; J. Kopecky, Organic Photochemistry: A Visual Approach, VCH Publishers, Inc., New York, N.Y. 1992; N. J. Turro, et al., Acc. Chem. Res., 1972, 5, 92; and J. T. Banks, et al., J. Am. Chem. Soc., 1993, 115, 2473. The synthesis of monoacetals of aromatic 1,2 diketones, Ar-CO-C(OR)₂-Ar' is described in U.S. Pat. No. 4,190,602 and Ger. Offen. 2,337,813.

The preferred compounds from the class of aromatic ketones include, but are not limited to, benzophenone, 4-methylbenzophenone, 4-aminobenzophenone, 4-methoxybenzophenone, 4-morpholinobenzophenone, dimethylbenzophenone, dimethoxybenzophenone, diphenoxybenzophenone, 4,4'-bis(dimethylamino)-benzophenone, acetophenone, p-methylacetophenone, p-methoxyacetophenone, butyrophenone, α-phenyl-butyrophenone, valerophenone, 1'-acetonaphthone, 2'-acetonaphthone, 1- hydroxycyclohexyl phenyl ketone, 2-hydroxy-2-methyl-1-phenylpropane-1-one, p-morpholinopropiophenone, 2-hydroxy-2-phenylacetophenone (benzoin), benzoin methyl ether, benzoin tetrahydrophyranyl ether, 2-hydroxy-2-methyl-1-phenyl-1-propanone, p-diacetylbenzene, 1,3,5-triacetylbenzene, anthrone, anthraquinone, acenaphthenequinone, 2-acetylphenanthrene, 3-acetylphenanthrene, 9-acetylphenanthrene, 7H-benz[de]anthracen-7-one, benz[a]anthracene- 7,12-dione, 9-fluorenone, α-tetralone, dibenzosuberone, xanthone, xanthene-9-one, isopropylthioxanthone, thioxanthen-9-one, thioxanthen-10-one, 1-indanone and benzyl. The more preferred photo initiators from this class are benzophenone, anthrone, xanthone, and their alkyl- or acyl- substituted derivatives like 4-methylbenzophenone, 2-hydroxy-2-phenylacetophenone (benzoin), 2-hydroxy-2-methyl-1-phenyl-1-propanone, and 1-hydroxycylcohexyl phenyl ketone, with benzophenone being the most preferred.

The preferred compound from the class of monoacetals of aromatic 1,2 diketones is 2,2-dimethoxy-2-phenylacetophenone which is commercially available from Ciba-Geigy as Irgacure 651.

Preferred photoinitiators have low migration from the formulated resin, as well as a low vapor pressure at extrusion temperatures and sufficient solubility in the polymer or polymer blends to yield good crosslinking efficiency. The vapor pressure and solubility, or polymer compatibility, of many familiar photoinitiators can be easily improved if the photoinitiator is derivatized. The derivatized photoinitiators include, for example, higher molecular weight derivatives of benzophenone, such as 4- phenylbenzophenone, 4-allyloxybenzophen one, and 4-dodecyloxybenzophenone. In one embodiment, the photoinitiator is optionally covalently bonded to a polymer or to a polymer diluent, such as described in U.S. Patent 5,993,922. In one embodiment, preferred photoinitiators are substantially non-migratory from the multicomponent structure.

The photoinitiators are advantageously used in an effective amount, that is an amount effective to increase the adhesion strength as measured at 93 °C between two layers or components having directly therebetween a composition comprising at least one olefin unsaturated ester copolymer, the photoinitiator and optionally at least one crosslinking enhancer after treatment with an effective amount of UV radiation at an effective wavelength. The amount of photoinitiator is advantageously sufficient to increase the adhesion strength after treatment with UV radiation from that measured without photoinitiator or radiation. The difference between adhesion strengths of with and without use of the composition of olefin unsaturated ester copolymer and irradiation used in the practice of the invention is advantageously at least 20, more advantageously at least 30, most advantageously at least 40, preferably at least 50, more preferably at least 75, and most preferably at least 100 N/m. Alternatively the increase in adhesion strength is advantageously at least 30, more advantageously at least 40, most advantageously at least 50, preferably at least 75, more preferably at least 100, most preferably at least 150 percent.

Effective amounts are advantageously amounts of at least 100 parts per million (ppm), more advantageously at least 500 ppm, most advantageously at least 0.10 percent, more preferably at least 0.2 weight percent. The amount of photoinitiator is advantageously less than or equ al to 10 weight percent, preferably less than or equal to 4 weight percent, more preferably less than or equal to 2 weight percent. The most preferred amount of photoinitiator depends on the actual application. Higher levels of photoinitiator (at least 1 weight percent and less than or equal to 2 weight percent) are believed to increase the crosslink density of the cured composition. In applications such as food applications where there may be concern regarding the possibility of certain photoinitiators contacting food or otherwise not remaining confined to the tie layer or other layers not in contact with the food or other substance where contact would not be preferred, lowest levels of photoinitiator consistent with sufficient adhesion are preferred, that is less than 1 percent is advantageous, less than 0.5 percent more advantageous, less than 0.1 percent (all inclusive). Otherwise, some other means of avoiding contact such as a barrier to migration of the photoinitiator, crosslinking enhancer, or both is preferred.

### Crosslinking enhancers

In one embodiment of the invention, the photoinitiator is used in combination with a crosslinking enhancer also referred to as a photocrosslinker. Any photocrosslinker that will upon the generation of free radicals or species that carry out hydrogen abstraction such as nitrenes, and carbenes link two or more polymer backbones together through the formation of covalent bonds with the backbones can be used in this invention. Preferably these photocrosslinkers are polyfunctional, that is, they comprise two or more sites capable of forming a covalent bond with a site on the backbone of the polymer. Representative photocrosslinkers include, but are not limited to, polyfunctional vinyl or allyl compounds, including multifunctional acrylates and methacrylates. Typical multifunctional acrylates and methacrylates have molecular weights of 150 to 1,000 and contain at least two polymerizable unsaturated groups per molecule. The preferred photocrosslinkers include, but are not limited to, triallyl cyanurate, triallyl isocyanurate, pentaerythritol triallyl ether, pentaerythritol triacrylate, pentaerythritol tetraacrylate, pentaerythritol tetramethacrylate, dipentaerythritol pentaacrylate, ethylene glycol diacrylate, ethylene glycol dimethacrylate, tetraethylene glycol diacrylate, 1,4-butanediol diacrylate, 1,4-butanediol dimethacrylate, 1,6-hexanediol diacrylate, 1,6-hexanediol dimethacrylate, methoxy-1,6-hexanediolpentaerythritol triacrylate, trimethylolpropane triacrylate, trimethylolpropane trimethacrylate, diallyl maleate, dipropargyl maleate, dipropargyl monoallyl cyanurate, polymethacrylate urethanes, polymeric epoxy acrylates, polyester acrylate monomers and oligomers, poly-n-butyleneoxide glycol diacrylates, and bisphenol A alkylene oxide adduct diacrylates and combinations thereof. Particularly preferred photocrosslinkers are triallycyanurate, triallylisocyanurate, pentaerythritol triallyl ether, pentaerythritol tetraacrylate, trimethylolpropane triacrylate, and trimethylolpropane trimethacrylate which are all commercially available.

In general, difunctional photocrosslinkers are less efficient than their analogues having higher level of functionalities. In compositions containing photocrosslinkers with higher level of functionalities, the compression set, gel formation or other indicator of crosslink density are enhanced compared to compositions containing difunctional photocrosslinkers. Consequently, photocrosslinkers of the class having higher functionalities are preferred for purposes of the present invention.

Certain compounds act as both a photoinitiator and a photocrosslinker in the practice of this invention. These compounds are characterized by the ability to generate two or more reactive species (for example, free radicals, carbenes, and nitrenes) upon exposure to UV-light and to subsequently covalently bond with two polymer chains. Any compound that can perform these two functions can be used in the practice of this invention. Representative compounds include the sulfonyl azides described in U.S. Pat. Nos. 6,211,302 and 6,284,842, which are incorporated herein by reference for their description of sulfonyl azides. Since such compounds function as photoinitiators, the term photoinitiator as used herein encompasses these compounds. Similarly, they are included in the term crosslinking enhancers. As such, they are optionally used in combination with other photoinitiators, crosslinking enhancers or both.

Use of crosslinking enhancers is optional. Crosslinking enhancers are preferably used when the desired level of crosslinking exceeds that conveniently obtainable using a desired concentration of photoinitiator. This can occur, for instance, when the olefin unsaturated ester copolymer is less facilely crosslinked, a high degree of crosslinking is desired, the activity or desired concentration of photoinitiator is relatively low or a combination of factors.

Crosslinking enhancers are used in and effective amount, that is an amount which improves the adhesion strength for a given photoinitiator concentration. Such amounts are advantageously at least 0.001, preferably at least 0.01, more preferably at least 0.1, most preferably at least 0.2 weight percent. Preferably the crosslinking enhancers are used in amounts less than that which would cause excessive crosslinking or adversely affect such qualities as thermal stability during processing. Such amounts are advantageously less than 5, preferably less than 4, more preferably less than 3, most preferably less than 2 weight percent.

The compositions involved in the present invention can also include one or more compounds that can act as antioxidants, light stabilizers or combinations thereof in the polymer photocrosslinking. The preferred antioxidants are chosen from the class of hindered phenols, an example includes, but is not limited to, Irganox 1076 which is Octadecyl 3-(3', 5'-di-tert-4'-hydroxyphenyl) propanoate commercially available from Ciba Geigy Corp.). The preferred light stabilizers are hindered amines (hindered amine light stabilizers, or HALS). An example includes, but is not limited to, Tinuvin 770 which is bis(2,2,6,6-Tetramethyl-4-piperidinyl) sebacate commercially available from Ciba Geigy Corp.

The olefin unsaturated ester copolymer and a photoinitiator (and optionally a photocrosslinker, photoadditives or a combination thereof) are suitably mixed at any time and by any means within the skill in the art. They are advantageously mixed during the film-forming extrusion step, for instance, by using a single or twin screw extruder in any of various mixing sections in manners within the skill in the art. For instance one or more of the photoinitiators, crosslinking enhancers and photoadditives, in solid or liq uid form with or without diluents, are admixed with the polymer, for example in pellet or powder form and introduced into equipment which includes one or more extruders. In some instances, it may be preferable to pre-compound photoadditive(s) prior to the extrusion step. In such approach, the photoadditive(s) are advantageously introduced for example using a masterbatch concentrate comprising the same or different base resin as the polyolefin unsaturated ester polymer. Preferably, the photoadditive concentration for the masterbatch ranges from 2 to 25 weight percent (based on the total weight of the concentrate).

### Actinic radiation

UV actinic radiation is provided to the composition comprising at least one olefin unsaturated ester copolymer and at least one photoinitiator sufficient to achieve an increase in interlayer or inter-component adhesion. For purposes of the process of this invention, the wavelength spectrum of radiation advantageously corresponds to the absorption maximum of a photoinitiator or crosslinking enhancer that is activated by radiation. Irradiation can be done by any conventional means. In the irradiation process, preferably the multicomponent structure or multilayer film is subjected to UV radiation treatment, which is believed to induce crosslinking between molecules of the irradiated material. While the invention is conveniently explained in terms of crosslinking, it should not be limited to this scientific theory of the mechanism of increasing adhesion.

In the case of most of the preferred photoinitiators and crosslinking enhancers, the absorption maximum ranges are usually from 170, preferably from 200, to 700 nanometers, preferably to 500 nanometers. This range is generally in the UV spectrum. Suitable UV radiation sources include medium pressure mercury vapor lamps, electrodeless lamps, pulsed xenon lamps, and hybrid xenon/mercury vapor lamps. A preferred arrangement comprises one or more lamps together with a reflector, which diffuses the radiation evenly over the surface to be irradiated. When the invention involves treatment of multilayer film in a process including extrusion through a die, a UV source capable of increasing the adhesion of the tie layer composition according to the practice of the invention is conveniently positioned near the die to irradiate the film in a molten state. Alternatively, the UV source is advantageously positioned to irradiate the film later, for instance after it has been quenched, during subsequent film handling steps. This step is optionally part of the conventional film fabrication processes, or a separate step to increase the adhesion of at least one tie layer according to the practice of the invention.

The radiation dosage is an effective amount, that is, sufficient to increase the inter-component or interlayer adhesion, believed to be the result of crosslinking in the composition. The amounts of increase are advantageously those previously described. Preferably, the dosage is sufficient to achieve maximum interlayer adhesion, which can be determined by those skilled in the art by testing a series of dosages until increased dosage does not increase the adhesion. The dosage, including power of the electromagnetic radiation and the irradiation time, is chosen to allow efficient adhesion improvement without unacceptable levels of polymer degradation, dimensional defects or a combination thereof. The dosage advantageous for a particular application will depend on such factors as the configuration of the component or layer in the structure or film, the composition of the layers and additives, the temperature of the material being irradiated and the particular wavelength used. Determining the dosage required for improved adhesion for any particular set of conditions is within the skill in the art.

A dosage of at least 1 joule per square meter, preferably at least 10,000 J/m² more preferably at least 100,000 J/m² is sufficient in most instances. In some compositions, an excessive dosage may result in some color of one or more components or layers of a multicomponent structure. Undesirable levels of such color are preferably avoided by reducing the dosage to until acceptable color is obtained, for instance to less than 5,000,000 J/m². Dosage is the source intensity (or power) (in watts) multiplied by the exposure time (in seconds) divided by the area of treated film (square meters). Area treated is a function of the source and the distance from the UV radiation source. In most instances, an acceptable degree of treatment can be obtained by exposures of at least 0.1 seconds, more advantageously at least 0.5, preferably at least 0.75, more preferably at least 1, most preferably at least 1.5 seconds. The exposure is advantageously less than or equal to 30 seconds, more advantageously less than or equal to 15, preferably less than or equal to 10, more preferably less than or equal to 5, most preferably less than or equal to 2 seconds using a lamp or other source of 4,800 W, over 0.0155 meter² of treated film corresponding to a UV exposure intensity of 310,000 J/m². 0.1 to 5 seconds corresponds to exposure to commercially available light sources at a convenient line speed for making and processing multilayer film. Appropriate adjustments for power of the lam p, distribution of the output over the UV range, the thickness of the sample as well as the polymeric component, and level of photoinitiator and crosslinking enhancer present are within the skill in the art.

The irradiation source is advantageously any UV-light generator operating in a range of 50 watts to 25,000 watts with a power output capable of supplying the desired dosage. Adjusting wattage to levels appropriate for a particular multicomponent structure or film and the equipment used for it is within the skill in the art. Irradiation is conveniently carried out at room temperature, although other temperatures are well within the practice of the invention. Photoinitiated processes are usually faster at higher temperatures. Preferably, the irradiation is carried out after shaping or fabrication of the structure or film.

In a preferred embodiment, at least one photoinitiator, optionally with at least one crosslinking enhancer, other photoactive additive or a combination thereof with sufficient thermal stability is admixed with a polyolefin unsaturated ester resin, formed into a film or structure, and irradiated in a continuous process using one energy source or several units linked in a series. Advantages to using a continuous process compared with a batch process to cure a film or sheet include reduced handing and equipment requirements.

In another embodiment of the invention, the component or layer need not be treated upon extrusion, but may be irradiated at some late r time, at the convenience of the processor, and typically in conjunction with other processing steps. In this embodiment, treatment optionally takes place at room temperature or at an elevated temperature below the melting point of the structure or film as a whole. For example, a film having layers with different melting points can be heated to a temperature between the melting points and then irradiated. The effect of treatment is expected to be enhanced in the layer with the lower melting point.

The present invention as described herein relates especially to improved methods and materials for making multilayer thermoplastic films, however, one of ordinary skill in the art will readily recognize that it is applicable to thermoplastic objects in a variety of forms such as cups, bottles, trays and other packaging. In addition, a film or layer according to the present invention is optionally used with a variety of substrates, including other polymeric materials, paper, glass, silica, and metal, as well as fabrics made from natural and synthetic fibers.

A multilayer plastic film in accordance with the invention can be produced by methods such as coextrusion, lamination, extrusion coating, corona bonding, blowing film, casting film, and extrusion coating lamination, preferably by coextrusion, more preferably by a combination of coextrusion and blowing or coextrusion and casting. A multilayer plastic film or multicomponent structure in accordance with the invention ca n also be used to produce bottles and other containers by blow molding or other processes within the skill in the art. Such methods are well within the skill in the art.

The films are conveniently made by blown film process within the skill in the art. Blown film extrusion processes are known and are described, for example, in U.S. Patents 2,409,521, 2,476,140, 2,634,459, 3,750,948, 4,997,616, 5,213,725, and 5,700,489. In an exemplary blown film extrusion process, commonly known as the "double bubble" process, a molten thermoplastic polymer is extruded through a tubular die. The extruded molten polymer exits the die and is quenched in a cold water bath into an amorphous polymer tube. This amorphous polymer tube is collapsed into a tape and then passed through a second warm water tank for conditioning prior to being formed into a bubble or blown film by the pressure of internal air in a bubble. The blown film is collapsed into a flat web, which is optionally split to form two layers of film.

In a preferred multilayer film embodiment, the film has orientation insufficient to provide shrink properties, preferably less than 5 percent shrink in both directions measured at 100 °C. These films are either produced by a cast process or by a conventional blown film process where the molten polymer exits the die and is cooled by an air ring.

Alternatively, a multi-layer barrier film of the invention may be produced by lamination technique using an appropriate adhesive layer. For example, it is possible that the barrier layer and a skin layer (single layer or plural layers) are separately formed and then they are laminated together using an composition comprising at least one olefin unsaturated ester copolymer and at least one photoinitiator.

One technique for manufacturing multilayer films of the present invention can use a coextrusion technique, such as that described in International Publication No. WO 93/07228 or U.S. Pat. No. 5, 660,922 (Herridge et al.). In a coextrusion technique, various molten streams are transported to an extrusion die outlet and joined together in proximity of the outlet. Extruders are in effect the "pum ps" for delivery of the molten streams to the extrusion die. The precise extruder is generally not critical to the process. A number of useful extruders are known and include single and twin screw extruders, and batch-off extruders. Conventional extruders are commercially available from a variety of vendors such as Davis-Standard Extruders, Inc. (Pawcatuck, Conn.), Black Clawson Co. (Fulton, N.Y.), Berstorff Corp. (NC), Farrel Corp. (CT), and Moriyama Mfg. Works, Ltd. (Osaka, Japan).

Films of the present invention are optionally annealed to minimize or eliminate necking in the film, to relieve asymmetric stresses in the film that give rise to shrinking, and to improve the dimensional stability. Commonly, the films are coextruded and then they are run over hot rolls, through a heated oven or subjected to an IR heater. It is desirable to heat treat the films under minimal tension so that the asymmetric stresses are relieved.

For some applications, it is preferred that the film or package conforms, at least substantially, to the shape of the contained product. Often, the film heat shrinks under cook-in conditions to form a tightly fitting package. Alternatively, the cook-in film package can be caused to shrink around the contained food product prior to initiating the cook-in procedure by, for example, placing the package in a heated environment prior to cooking.

The films of the present invention are optionally oriented, either uniaxially (that is, substantially in one direction) or biaxially (that is, substantially in two directions), if so desired. Such orientation can result in improved strength properties, as evidenced by higher modulus and tensile strength. Optionally heat-setting at a selected temperature may follow the orienting step.

In addition, for purposes of the present invention, the processing temperature advantageously will not exceed the temperature at which thermal degradation of the olefin unsaturated ester copolymer, photoinitiator or crosslinking enhancer occurs. In some cases, such degradation wo uld result in scorched compositions due to formation of free radicals. Thermally-induced fragmentation of the initiator within the processing equipment can result in premature crosslinking. In other instances, slow curing compositions would result from inactivation of the initiator. Degradation temperatures differ for each olefin unsaturated ester copolymer, photoinitiator or crosslinking enhancer. Depending upon the type of polymer and the amount of additives, the processing tem perature often conveniently ranges from between 140 °C and 250 °C.

Methods of making multicomponent structures of the invention are within the skill in the art. Regardless of the method used to make the multicomponent structu re, including multilayer film of the invention, there are steps of providing a composition comprising at least one olefin unsaturated ester copolymer and at least one compound selected from the group comprising photoinitiators and crosslinking enhancers, which providing may include admixing the copolymer and compound. Preferably during production or, alternatively, between initial production and use, or both, the multicomponent structure or film is treated or irradiated with UV radiation.

The thickness of a multilayer film according to the practice of the invention is advantageously at least 20, preferably at least 50 microns and preferably less than 300, more preferably less than 100 microns thick (2X10⁻⁵, 3X10⁻⁵, 3X10⁻⁴, 1X10⁻⁴ m, respectively).

The invention is applicable to the use of a tie layer of the invention directly between at least two parts of a multicomponent structure, referred to herein as layers for convenience. While at least one layer, exemplified by the first layer, advantageously comprises at least one vinylidene chloride polymer, other layers, exemplified herein by the second layer, are suitably any material, preferably any material to which the first layer may exhibit insufficient adhesion, especially under conditions of elevated temperature. More preferably the second layer is one with which the first layer exhibits insufficient interlayer adhesion at elevated temperatures even when a tie layer composed of the olefin unsaturated ester copolymer but without the photoinitiator or photoinitiator and crosslinking enhancer used in the practice of the invention or with those components but before exposure to sufficient actinic radiation. In the case of multilayer films, the material can be any material suitable for making film layers therefrom. The material is advantageously polymeric. The second layer optionally also comprises at least one vinylidene chloride polymer, which may be of the same or a different composition from the first layer. Preferably, however, the second layer comprises at least one polymer different from a vinylidene chloride polymer. Such polymers include polyolefins, polyesters, polyamides, and polycarbonates, more specifically polyethylene (PE), medium density polyethylene (MDPE), high density polyethylene (HDPE), low density polyethylene (LDPE), White LDPE, linear low density polyethylene (LLDPE), very low density polyethylene (VLDPE), polypropylene (PP), propylene ethylene copolymer (PPE), nylon, ethylene vinyl acetate (EVA), high VA content EVA (for example 12-35 percent by weight VA content EVA), ethylene methyl acrylate copolymer (EMA), ethylene ethyl acrylate copolymer (EEA), ethylene butyl acrylate copolymer (EBA), high impact polystyrene (HIPS), polyvinyl chloride (PVC), ethylene butene copolymer (EB), maleic anhydride modified polyolefins (wherein "polyolefins" includes EVA), polyethylene terephthalate (PET), copolymers of PET or CoPET, or an ionomer, for example, SURLYN (DuPont), or the like, or combinations or mixtures thereof. As to nylon, nylon 6; 11; 12; 6, 12 and 6, 66 are suitable as are commercially available products such as ULTRAMIDKR™ 4600 (BASF), NOVAMID™ 2030 (Mitsubishi Chem. Co.), DURATHANE™ (Farbenfabriken Bayer, A. G.), "1030" (Unitika, Japan), ZYTEL SUPERTUFF™ 811 (DuPont), "4018" (Huels, Germany), and ELY™ 1256 (Elmser, Switzerland). Other suitable commercially available materials include Exxon 5610 (blend of PP containing EVA), Admer™ (Mitsui), for example Admer™ No. AT469C, Bynel™ (DuPont), for example Bynel™ E361 or 3036), Plexar™ 3342. Admer™, Bynel™ and Plexar™ 3342 polymers are believed to be maleic anhydride modified polyolefins.

In a multilayer film a second layer advantageously has a thickness at least 3 microns (3X10⁻ m), preferably at least 10 microns (10⁻⁵ m), more preferably at least 15 microns (15X10⁻⁶ m) to achieve abuse-resistance, sealing, or other properties. The layer is advantageously less than or equal to 100 microns (10⁻⁴ m), preferably less than or equal to 50 microns (50X10⁻⁶ m), more preferably less than or equal to 25 microns (30X10⁻⁶ m) for the purpose of providing abuse resistance or sealing properties.

Skin layer or layers preferably comprise a material selected from one or more of the layers listed as second layers, preferably isotactic polypropylene homopolymer (iPP), ethylene propylene block copolymer, ethylene propylene random copolymer (RCP), propylene butene copolymer (PB), ethylene propylene butene terpolymer (EPB), high density polyethylene (HDPE), linear low density polyethylene (LLDPE), medium density polyethylene (MDPE), ethylene vinyl alcohol (EVOH), low density polyethylene (LDPE), ethylene vinyl acetate (EVA) or combinations thereof, with the polyethylenes more preferred. If there are two skin layers, they are optionally the same or different both compositionally and in thickness.

A multilayer film according to the present invention preferably includes at least one layer having a low permeance to oxygen, preferably an oxygen permeance of no more than (in ascending order of preference) 150 cm³/m²•atm•24 hours, 125 cm³/m²•atm•24 hours, 100 cm³/m²•atm•24 hours, 75 cm³/m²•atm•24 hours, 50 cm³/m²•atm•24 hours, 30 cm³/m²•atm•24 hours, 20 cm³/m²•atm•24 hours, and 10 cm³/m²•atm•24 hours. Such an O₂-barrier layer can include one or more of the following polymers: EVOH, PVDC, polya Ikylene carbonate, polyamide, and polyester; of the foregoing, PVDC is particularly preferred. A barrier layer preferably has the structure preferred for the PVDC layer previously described.

The multilayer film of the present invention, in another embodiment, includes one or more other layers, preferably from one to four additional layers. Such layer(s) optionally serve as inner or outer layers and are optionally classified as bulk layers, barrier layers, seal layers, or abuse layers. Such a layer optionally includes one or more polymers described as polyolefins, polyvinylidene chloride polymers, polyolefin unsaturated ester polymers, polyurethanes, polyamides, polyesters or halopolymers, and preferably include at least one polymer of at least one C₂-C₁₂ α-olefin, styrene, amide, ester, or urethane. In one embodiment, the film of the present invention optionally includes a layer derived, at least in part, from a polyester, a polyamide or combination thereof. This layer is optionally an inner or outer layer as desired. Examples of suitable polyesters include amorphous (co)polyesters, poly(ethylene/terephthalic acid), and poly(ethylene/naphthalate), although poly(ethylene/terephthalic acid) with at least 75 mole percent, more preferably at least 80 mole percent, even more preferably at least 85 mole percent, and most preferably at least 90 mole percent of its mer units derived from terephthalic acid can be preferred for certain applications.

Where such a layer includes a polyamide, the polyamide optionally includes one or more of polyamide 6, polyamide 6/66, polyamide 6,66, polyamide 6.66, polyamide 9, polyamide 10, polyamide 11, polyamide 12, polyamide 66, polyamide 610, polyamide 612, polyamide 6l, polyamide 6T, polyamide 69, copolymers made from any of the monomers used to make two or more of the foregoing homopolymers, and blends of any of the fo regoing homopolymers, copolymers or combination thereof.

Such layers have a thickness preferably at least 0.005 mm, more preferably at least 0.025, most preferably at least 0.05 mm. The thickness is preferably less than or equal to 1, more preferably less than or equal to 0.5, most preferably less than or equal to 0.25 mm. In most instances, the thickness is advantageously at least 1, more advantageously at least 5, preferably at least 10, more preferably at least 15, most preferably at least 25, and advantageously up to 70, more advantageously to 60, preferably to 50, more preferably to 45, and most preferably to 40 percent of the total thickness of a multilayer film.

The present invention also provides a multicomponent structure such as a blow molded container formed from multilayer plastic film having a series of component layers and at least one bonding layer bonding at least two of said component layers together, said bonding layer comprising at least one olefin unsaturated ester copolymer and at least one photoinitiator, an adjacent barrier, preferably polyvinylidene chloride (PVDC) layer, and preferably outer layers preferably comprising a polyolefin homopolymer, copolymer or ionomer, more preferably an ethylene polymer, most preferably a LLDPE.

Preferably, the film according to the present invention comprises a total of from 2 to 20 layers; more preferably, from 2 to 12 layers; more preferably, from 2 to 9 layers; more preferably, from 3 to 8 layers. Various combinations of layers can be used in the formation of a multilayer film according to the present invention. Given below are some examples of preferred combinations in which letters are used to represent film layers. Although only 2-through 9-layer embodiments are provided here for illustrative purposes, more or additional layers are optionally present. Structures of the invention include the following where A is a skin layer, B is a barrier layer or layer having interlayer adhesion characteristics similar to that of a vinylidene chloride polymer, C is an abuse, bulking or other layer which is appropriately stiff or flexible and optionally provides additional properties to the multilayer film, and T is a tie layer where at least one layer designated "T" comprises at least one olefin unsaturated ester copolymer and at least one photoinitiator. Note that within a structure having more than one layer represented by the same letter, the layers may differ in composition. For instance, A/A (not an example of the invention, used for illustrative purposes only) optionally has a first polyethylene layer and a second polypropylene layer. Similarly, A/T/B/T/A and A/T2/T1/B/T1/T2/A include films having a first tie layer according to the invention and a second tie layer of composition within the skill in the art as well as films having two tie layers according to the practice of the invention which are optionally of the same or different composition. Illustrative structures according to the practice of the invention include A/T/B, A/T/B/T/A, A/T/B/T/C, A/T/B/C, A/B/T/C, A/T/C/T/B/T/C/T/A, A/T/C/T/B, A/C/T/B, A/T/C/T/B/T/C, A/T/B/A, A/T/B/T/C/A, A/T/B/C/A, A/B/T/C/A, A/T/C/T/B/A, A/C/T/B/A, A/T/C/T/B/T/C/A, A/T/B/T/A, A/T/B/T/C/T/A, A/T/B/C/T/A, A/B/T/C/T/A, A/T/C/T/B/T/A, A/C/T/B/T/C/T/A, A/C/T/B/T/C/A, A/C/T/B/T/A, as well as variations on each of these wherein one or more of A, B, C or T is optionally multiple layers such as A represented by A1/A2, A1/A2/A3, A1/A2/A1, B as B1 /B2, B1/B2/B3, B1/B2/B1, C as C1/C2, C1/C2/C3, C1/C2/C1, T as T1/T2, T1/T2/T3, T1/T2/T1 or combinations thereof where the layers with numerical designations are optionally of the same or different composition, at least one T is a tie layer according to the practice of the invention and each numeric designation of T is either a tie layer according to the practice of the invention or a tie layer within the skill in the art, all being of the same or different compositions. The invention includes, for instance, films disclosed in such references as 4,692,361; 5,993,922; 6,342,282; 6,379,812; and 6,551,674 wherein at least one tie layer according to the practice of the present invention is added or substituted for a tie, bonding or adhesion layer taught in the reference. A vinylidene chloride polymer is advantageously used for a layer, preferably a barrier layer, adjacent at least one tie layer according to the practice of the present invention, in the films.

A multilayer plastic film is optionally laminated to a web, preferably before cooling.

Regardless of the structure of the multilayer film of the present invention, one or more conventional packaging film additives are optionally included therein. Examples of additives that can be incorporated include, but are not limited to, antiblocking agents, antifogging agents, slip agents, colorants, flavorings, antimicrobial agents, and meat preservatives. The ordinarily skilled artisan is aware of numerous examples of each of the foregoing. Where the multilayer film is to be processed at high speeds, inclusion of one or more antiblocking agents in, on or in and on one or both outer layers of the film structure can be preferred.

Films and other multicomponent structures of the invention are optionally further treated by means within the skill in the art such as by corona, plasma or both to increase adhesion to meat or the same or other surface-treatment to enhance receptiveness to metallization, coating, printing inks or lamination.

A film of the invention advantageously has an adhesion strength as measured according to the procedures of ASTM 904-98 at 93 °C advantageously of at least 50 N/m, more advantageously at least 55 N/m, most advantageously of at least 75, preferably at least 87.5, more preferably at least 90, most preferably at least'1 00 and even more preferably at least 120 N/m. These adhesion strengths are measured after manufacture of a multicomponent structure of the invention but before subsequent exposure of the structures to temperatures in excess of ambient temperatures.

A film of the invention advantageously can survive exposure to, preferably cooking, without undergoing spontaneous delamination at least 65 °C, more advantageously at least 70 °C, most advantageously at least 75 °C, preferably at least 80 °C, more preferably at least 85 °C, most preferably at least 90 °C, and especially at least 93 °C. Advantageously, the film of the present invention is capable of surviving exposure to those temperatures for at least 1 minute, more advantageously at least 2 minutes, most advantageously at least 5 minutes, preferably at least 10 minutes, more preferably at least 20 minutes, most preferably at least 60 minutes, and in especially favored embodiments at least 120 minutes. Although testing is advantageously done with a liquid inside a bag of the film, the product being cooked preferably includes a meat, or other cookable food product, for example proteinaceous or plant food products, more particularly fatty foods. While complete avoidance of delamination is the goal, for purposes of the invention, a multicomponent structure is considered to survive the stated heat exposure conditions if the structure of the invention exhibits at least 30, advantageously at least 40, more advantageously at least 50, most advantageously at least 60, preferably at least 70, more preferably at least 80, most preferably at least 90 percent fewer delaminations visible to the unaided eye compared with a multicomponent structure of the same composition, components and structure except one of either not having the photoinitiator in the olefin unsaturated ester copolymer composition (tie layer) or not being irradiated with UV radiation.

In a preferred embodiment of the invention a bag is made from the film of the present invention by sealing to itself an outer layer, whereby that layer becomes the inside layers of the bag. Such bags include end- seal bags, side-seal bags, L-seal bags, lap seal bags, or pouches. The film or bag thereof is suitably formed into food packaging, for example by first forming a bag or casing from the film, introducing the product into the bag or casing, then sealing the open side of the bag or casing. Alternatively, the film of the present invention is wrapped substantially completely around the product then heat sealed to form a package. Optionally, films, bags or packages of appropriate construction are heat shrunk around the contents of the package. Packages of films or structures are suitable for exposure to temperatures suitable for cooking or other heat treatment of the packaging and contents.

In addition to use in food packaging, especially retort and hot fill applications, practice of the invention is useful in formation of any multilayer or multicomponent structure, particularly any such structure suitable for high temperature application where delamination would be disadvantageous. Special application is found in coextrusion of structures with polyvinylidene chloride layers or other layers having other halogen-containing polymers, especially ones that demonstrate delamination. Additionally, practice of the invention is useful in preparing such items as clothing and tents, especially flame retardant items, which are within the skill in the art such as disclosed by Romanowski in U.S. Patent 5,811,359.

Objects and advantages of this invention are further illustrated by the following examples. The particular materials and amounts thereof, as well as other conditions and details, recited in these examples should not be used to limit this invention. Unless stated otherwise all percentages, parts and ratios are by weight.

### Examples 1-6 and Comparative Sample C : Enhancement of 93 °C peel-adhesion strength of benzophenone-modified EVA Tie Layer with UV Irradiation.

Preparation of tie-layer material: Benzophenone at a level of 2 weight percent is incorporated into Elvax 3190 ethylene vinyl acetate having 25 percent vinyl acetate and melt index (MI) determined according to the procedures of ASTM D-1238 (190 °C/ 2.16 kg) of 2 (commercially available from DuPont) by twin screw extrusion compounding with a counter-rotating twin crew extruder at a melt temperature of 150 °C. This 2 weight percent benzophenone modified EVA is used undiluted in coextrusion for Examples 1-3, and diluted to a 1 weight percent benzophenone EVA composition before coextrusion in a Examples 4-6.

### Coextrusion of Multi-Layer Structures :

The following five-layer coextrusion structures (Skin/Tie layer/PVDC/Tie layer/Skin) are made using a multi-extruder coextrusion system. All films have thicknesses of 6 mil (152.4 micron). Each skin layer is 40 percent of the total thickness. Each tie layer is 5 percent of the total thickness, and the PVDC core is 10 percent of the total thickness.

### Sample A:

Skin layers = A LLDPE with MI = 5.5, Density = 0.921 commercially available from The Dow Chemical Company under the trade designation Dowlex 3010, hereinafter LLDP E-1
Tie layers = EVA + 2 weight percent benzophenone prepared previously
PVDC = A PVDC copolymer of vinylidene chloride and 7.75 weight percent methyl acrylate, hereinafter referred to as PVDC-1

### Sample B :

Skin layers = LLDPE -1
PVDC = PVDC-1
Tie layer = EVA+ 1 weight percent benzophenone as previously prepared

### Sample C:

Skin layers = A LDPE with MI = 1.9, Density = 0.926 commercially available from The Dow Chemical Company under the trade designation Dow LDPE 535l hereinafter LDPE-2
Tie layers = EVA unmodified (without added benzophenone)
PVDC = PVDC-1

### Sample D:

Skin layers = LDPE-2
Tie layers = EVA containing 1 weight percent benzophenone
PVDC = PVDC-1

### Irradiation of Coextrusion Multi-layer Structures :

The UV irradiation source is a H-type UV bulb with an effective length of 8 inches (0.2032 m) long. The total energy output of the bulb is 4800 watts. The entire output of the UV sou rce is focused onto an area of 4 inches by 6 inches (0.1016 m by 0.1524 m).

Samples A, B, C and D are cut into test strips of 1 inch (0.0254 m) wide and 6 inches (0.1524 m) long. Samples A, B, and D are UV irradiated. Sample C is not irradiated. The sample strips to be UV irradiated are placed into the area of irradiation of the UV source. The time of exposure to the UV light is controlled by a shutter. Each strip is irradiated on both sides for the same amount of time.

### Peel-Adhesion Testing :

The test strips are first fold ed over and heat-sealed using a JB Instruments Hot Tack Tester. The polyolefin skin layers heat sea I together. The temperature of the upper and lower sealed bars are set at 150 °C, with a sealing time of 0.85 sec and a sealing pressure of pressure of 0.27 N/mm².

A small amount of acetone is applied with a cotton swab to the sealed area and force is applied manually by pulling on opposite sides of the seal to cause delamination in the tie-layer. The delaminated portion is then extended to an inch (0.0254 m) long to allow for gripping on the Instron MTS Renew Universal Tensile Model 1123 tester, with a test speed of 10 inches per minute (0.0042 m/sec) for peel-adhesion testing. After the acetone is dried, the two delaminated surfaces are gripped in an Instron for a peel test at 93 °C. This peel-adhesion test is in conformance to ASTM F904-98. The force required to propagate the delamination was recorded as the peel-adhesion value.

Results : The Peel-Adhesion at 93 °C value of the irradiated Samples A, B, and D, and that of the un-irradiated Sample C are listed in Table 1.

**Table 1: 93 °C Peel-Adhesion Test Results of UV Irradiated Benzophenone-modified EVA Tie-Layers**

| Example | UV Irradiation Time / side, sec | Sample | Adhesion N/m | Adhesion Std. Dev., N/m |
|---|---|---|---|---|
| 1 | 1 | A | 124.86 | 25.57 |
| 2 | 2 | A | 96.67 | 28.54 |
| 3 | 5 | A | 105.42 | 35.90 |
| 4 | 1 | B | 153.05 | 31.00 |
| 5 | 2 | B | 182.30 | 96.60 |
| 6 | 5 | B | 142.72 | 27.32 |
| C* | 0 | C | 22.06 | 11.74 |
| 7 | 1 | D | 97.19 | 8.41 |
| 8 | 2 | D | 102.97 | 13.48 |
| 9 | 5 | D | 86.16 | 25.92 |

| | | | | |
|---|---|---|---|---|
| *Not an example of the invention | | | | |

From the results in Table 1, it can be seen that adding benzophenone at both 1 weight percent and 2 weight percent to the tie-layer EVA, followed by UV irradiation of the film, causes a significant improvement in the 93 °C peel-adhesion test results over the non-benzophenone-modified, non-UV-irradiated EVA tie layer material. Comparison of Examples 7, 8 and 9 with Examples 1-6 also shows that data is comparable for multilayer films having LDPE-1 and LDPE-2 as skin layers. This is expected since the composition and density are similar and the interfacial interaction with the EVA composition would be expected to be very similar.

### Examples 10-15 and Comparative Sample F : Enhancement of 93 °C peel-adhesion strength of benzophenone modified EMA Tie Layer with UV Irradiation.

Preparation of tie-layer material: 2 weight percent of benzophenone is incorporated into ethylene methyl acrylate polymer having 29 percent methyl acrylate and melt index of 3 determined as in Example 1 commercially available from Atofina Chemical under the trade designation Lotryl™ 29MA03 (EMA-1) by twin screw extrusion compounding with a counter-rotating twin screw extruder at a melt temperature of 150 °C. This 2 weight percent benzophenone-modified EMA is used undiluted for Sample D and used after dilution to 1 weight percent benzophenone content for Sample E.

### Coextrusion of Multi-Layer Structures :

The following five layer coextrusion structures (Skin/Tie layer/PVDC/Tie layer/Skin) are made using a multi-extruder coextrusion system. All films have a thickness of 6 mil (152.4 micron). Each skin layer is 40 percent of the total thickness. Each tie layer is 5 percent of the total thickness, and the PVDC core is 10 percent of the total thickness.

### Sample E:

Skins = LLDPE-1
Tie layers = EMA-1 containing 2 weight percent benzophenone previously prepared
PVDC = PVDC-1

### Sample F :

Skin layers = LLDPE -1
PVDC = PVDC-1
Tie layer = EMA-1 containing 1 weight percent benzophenone previously prepared

### Sample G:

Skin layers = LDPE-2
Tie layers = EMA-1 unmodified (without added benzophenone)
PVDC = PVDC-1

For irradiation of coextrusion multi-layer structure Samples E, F, and G are cut as in Example 1. Samples E and F are irradiated as in Example 1. The test strips are prepared and tested as in Example 1.

Results : The Peel-Adhesion at 93 °C value of the irradiated samples E and F and that of the un-irradiated sample G are listed in Table 2.

**Table 2: 93 °C Peel-Adhesion Test Results of UV Irradiated Benzophenone-modified EMA Tie-Layers**

| Example | UV Time /side (sec) | Sample | Adhesion N/m | Adhesion Std. Dev., N/m |
|---|---|---|---|---|
| 10 | 1 | E | 59.37 | 19.44 |
| 11 | 2 | E | 75.83 | 9.81 |
| 12 | 5 | E | 69.35 | 8.23 |
| 13 | 1 | F | 94.56 | 13.66 |
| 14 | 2 | F | 95.43 | 22.94 |
| 15 | 5 | F | 75.65 | 31.52 |
| G* | 0 | G | 38.88 | 14.01 |

| | | | | |
|---|---|---|---|---|
| *Not an example of the invention | | | | |

From the results in Table 2, it can be seen that adding benzophenone at both 1 weight percent and 2 weight percent to the tie layer EMA, followed by UV irradiation of the film, causes a large degree of improvement in the 93 °C peel-adhesion test results over the non-benzophenone modified, non-UV irradiated EMA tie layer material

### EXAMPLE 16 AND COMPARATIVE SAMPLE H

The procedure of Example 10, Sample E, is repeated except that the EMA is different and contains 0.05 weight percent benzophenone for Sample H and the resulting film is exposed to UV radiation using the same equipment as used in preparing Sample E. The EMA is a mixture of 71.45 weight percent of EMA-1 and 28.5 weight percent of a resin having 24 percent by weight methyl acrylate and 76 percent by weight ethylene, having a melt index of 0.5 determined as in Example 1, commercially available from Atofina under the trade designation LOTRYL 24MA005. The mixture is referred to herein as EMA-2.

### Sample H:

Skin layers = LDPE-1
Tie layers = EMA-2 containing 0.05 weight percent benzophenone
PVDC = PVDC-1

Results: The Peel-Adhesion test is performed as in Example 1 and the values are listed in Table 3.

**Table 3: 93 °C Peel-Adhesion Test Results of UV Irradiated Benzophenone-modified mixed EMA Tie-Layers**

| Example | UV Irradiation Time, sec per side | Sample | Adhesion N/m | Adhesion Std. Dev., N/m |
|---|---|---|---|---|
| 16 | 2 | H | 175 | 76 |
| H* | 0 | H | 18 | 1 |

| | | | | |
|---|---|---|---|---|
| *Not an example of the invention | | | | |

The data in Table 3 show that a mixture or blend of olefin unsaturated ester copolymers, particularly of olefin copolymers with alkyl esters of unsaturated acids, more particularly of ethylene and alkyl methacrylates, having different characteristics such as amount of unsaturated acid monom er, melt index or its associated molecular weight, or both, exhibits very useful results in the practice of the invention.

### EXAMPLE 17 AND COMPARATIVE SAMPLE K

The procedure of Example 4, Sample B, is repeated except that the EVA contains 1000 parts per million (ppm) benzophenone for Sample J and the resulting film is exposed to UV radiation using the same equipment as used in preparing Sample B. The 2 weight percent benzophenone modified EVA is diluted in a 20:1 ratio with EVA to produce the 1000 ppm benzophenone concentration. The following samples are prepared:

### Sample J:

Skin layers = LDPE-2
Tie layers = EVA containing 1000 ppm benzophenone
PVDC = PVDC-1

### Sample K:

Skin layers = LDPE-2
Tie layers = EVA with no benzophenone
PVDC = PVDC-1

Results: The Peel-Adhesion test is performed as in Example 1 and the values are listed in Table 4 -

**Table 4: 93 °C Peel-Adhesion Test Results of UV Irradiated Benzophenone-modified EVA Tie-Layers**

| Example | UV Irradiation Time, sec per side | Sample | Adhesion N/m** | Adhesion Std. Dev., N/m |
|---|---|---|---|---|
| 17 | 2 | J | 125.03 | 23.64 |
| K* | 0 | K | 24.69 | 1.96 |

| | | | | |
|---|---|---|---|---|
| *Not an example of the invention ** Converted from lb/in at 175.118 N/m per lb/in | | | | |

The data in Table 4 show that amounts of photoinitiator in the 1000 parts per million range are still very effective in achieving increased adhesion.

### EXAMPLE 18 -21 AND COMPARATIVE SAMPLE L

Samples L trough Q are prepared as Sample B except using high density polyethylene (HDPE) skin layers and the amounts of benzophenone listed in Table 5. Samples R and S are prepared as Sample H using the same mixture of EMA polymers, except using the HDPE skin layers. Samples L through S are coextruded having the following structures:

### Samples L through Q :

Skin layers = A high density polyethylene (HDPE with melt index =1.0, Density = 0.962 g/cm³ commercially available from Equistar under the trade designation ALATHON 6210 (hereinafter HDPE-1).
Tie layers = EVA containing the weight percent benzophenone indicated in Table 5
PVDC = PVDC-1

### Samples R and S:

Skin layers = HDPE-1
Tie layers = EMA-2 containing the weight percent benzophenone indicated in Table 5
PVDC = PVDC-1

The Samples are irradiated and cut as in Example 1. The samples are tested for peel adhesion as in Example 1 except at 100 °C.

Results : The Peel-Adhesion values of the irradiated Samples L through S at 100 °C are listed in Table 5.

**Table 5: 100 °C Peel-Adhesion Test Results of UV Irradiated Benzophenone-modified EVA Tie-Layers**

| Example | UV Irradiation Time / side, sec | Benzophenone concentration | Sample | Adhesion N/m | Adhesion Std. Dev., N/m |
|---|---|---|---|---|---|
| L* | 2 | 0 | L | 12.96 | 0.7 |
| 18 | 2 | 0.05 | M | 52.54 | 35 |
| 19 | 2 | 0.1 | N | 59.54 | 24.5 |
| 20 | 2 | 0.25 | P | 113.83 | 31.5 |
| 21 | 2 | 0.5 | Q | 157.61 | 54.3 |
| 22 | 2 | 0.05 | R | 175.12 | 24.5 |
| 23 | 2 | 0.1 | S | 152 | 35 |

| | | | | | |
|---|---|---|---|---|---|
| *Not an example of the invention ** Converted from lb/in at 175.118 N/m per lb/in | | | | | |

The data in Table 5 shows a 300 percent improvement using even 0.05 weight percent photoinitiator and 2 seconds irradiation over comparative sample L when the tie layer is an ethylene vinyl acetate. Increasing the amount of photoinitiator or using a mixed melt index ethylene methyl acrylate as the olefin unsaturated ester copolymer improves the results, showing as much as a 1200 percent improvement in adhesion strength measured at 100 °C over sample L where EVA is the olefin unsaturated ester copolymer. To assist in comparison, note that an adhesion value obtained at 100 °C indicates better adhesion than the same value obtained at 93 °C.

While the invention is explained in terms of olefin unsaturated ester copolymers, it is expected that tie layers within the skill in the art such as thermoplastic polyurethane, maleic anhydride grafts of polyolefin homopolymers and copolymers and chlorinated polyethylene could be similarly admixed with a photoinitiator and optionally a crosslinking enhancer and irradiated with actinic radiation of a wavelength appropriate for the photoinitiator to increase the adhesion strength over the tie layer without either the photoinitiator or the irradiation.

## Claims

1. A multicomponent structure comprising at least two components, a first and a second component, having a tie layer directly between them, the tie layer comprising at least one olefin unsaturated ester copolymer and at least one photoinitiator, wherein at least the first component includes a majority of a vinylidene chloride polymer or combination of vinylidene chloride polymers (hereinafter PVDC component) wherein the structure has increased interlayer adhesion strength measured according to ASTM F904-98 at 93 °C after irradiation with UV radiation as compared with the interlayer adhesion strength before treatment with the UV radiation.

2. The structure of Claim 1 in the form of a multilayer film.

3. The structure of Claim 1 wherein at least one second component comprises at least one polymer, glass, silica, paper, metal, fabric or combination thereof.

4. The structure of Claim 1 wherein the second component comprises a polymer selected from at least one vinylidene chloride polymer, which may be of the same or a different composition from the first component or layer, or at least one polymer selected from polyolefins, polyesters, polyamides, and polycarbonates, polyethylene (PE), medium density polyethylene (MDPE), high density polyethylene (HDPE), low density polyethylene (LDPE), White LDPE, linear low density polyethylene (LLDPE), very low density polyethylene (VLDPE), polypropylene (PP), propylene ethylene copolymer (PPE), nylon, ethylene vinyl acetate (EVA), EVA having 12-35 percent by weight VA content, ethylene methyl acrylate copolymer (EMA), ethylene ethyl acrylate copolymer (EEA), high impact polystyrene (HIPS), polyvinyl chloride (PVC), ethylene butene copolymer (EB), maleic anhydride modified polyolefins (wherein "polyolefins" includes EVA), polyethylene terephthalate (PET), copolymers of PET, or an ionomer, or combination thereof.

5. The structure of Claim 1 wherein the olefin unsaturated ester copolymer comprises at least one ethylene/ethyl acrylate copolymer or at least one ethylene/methyl acrylate.

6. The structure of Claim 1 wherein the olefin unsaturated ester copolymer comprises at least two olefin unsaturated ester copolymers.

7. The structure of Claim 6 wherein at least two olefin unsaturated ester copolymers comprise the same olefin and unsaturated ester copolymers of the same type, that is unsaturated esters having unsaturated acid moieties or having unsaturated alcohol moieties differing in melt index by at least 1 g/10 min.

8. The structure of Claim 1 wherein the photoinitiator is selected from the group consisting of aromatic ketones, aromatic monoacetals of 1,2-diketones, aromatic α-hydroxy ketones, quinones, organic peroxides, azo compounds, nitroso compounds, acyl halides, hydrozones, mercapto compounds, pyrylium compounds, triacylimidazoles, acylphosphine oxides, bisimidazoles, chloroalkyltriazines, benzoin ethers, benzyl ketals, thioxanthones, and mixtures thereof.

9. The structure of Claim 8 wherein the photoinitiator is selected from aromatic ketones, monoacetals of 1, 2-diketones or mixtures thereof.

10. The structure of Claim 1 wherein at least one crosslinking enhancer is present.

11. The structure of Claim 10 wherein the crosslinking enhancer is selected from the group consisting of triallyl cyanurate, triallyl isocyanurate, pentaerythritol triallyl ether, pentaerythritol triacrylate, pentaerythritol tetraacrylate, pentaerthritol tetramethacrylate, dipentaerythritol pentaacrylate, ethylene glycol diacrylate, ethylene glycol dimethacrylate, tetraethylene glycol diacrylate, 1,4-butanediol diacrylate, 1,4-butanediol dimethacrylate, 1,6-hexanediol diacrylate, 1,6-hexanediol dimethacrylate, methoxy-1,6-hexanediolpentaerythritol triacrylate, trimethylolpropane triacrylate, trimethylolpropane trimethacrylate, diallyl maleate, dipropargyl maleate, dipropargyl monoallyl cyanurate, polymethacrylate urethanes, polymeric epoxy acrylates, polyester acrylate monomers and oligomers, poly-n-butyleneoxide glycol diacrylates, and bisphenol A alkylene oxide adduct diacrylates and combinations thereof.

12. The structure of Claim 1 further comprising an additional layer or component comprising a polymer comprising mer units derived from at least one member of the group consisting of C₂-C₁₂ α-olefin, styrene, amide, ester, urethane (isocyanates, amine, or hydroxyl), and combinations thereof.

13. The structure of Claim 1 which has from 3 to 11 components or layers.

14. The structure of any of Claims 1-13 in the form of a film, bag, pouch, tube, casing, lined pipe, coextruded pipe, sheet, lidstock, package or container; a cook-in, hot-fill, or retortable film, bag, container or package; a blow molded structure; or a combination thereof.

15. The structure of any of Claims 1-13 wherein the effect of irradiation is shown by at least one of (a) the components in the presence of the tie layer have an adhesion strength measured according to ASTM F904-98 at 93 °C of at least 50 N/m after the structure has been irradiated with UV radiation, as compared with an adhesion strength of less than 40 N/m before irradiation; (b) the increase in adhesion strength measured according to ASTM F904-98 at 93 °C before and after irradiation is at least 20 N/m or 30 percent of the adhesion strength before irradiation; or (c) the first and second components separated by the tie layer after irradiation exhibit at least 50 percent fewer spontaneous delamination failures after commercial processing which involves exposure to at least one of: a temperature of at least 65 °C for a period of at least 5 minutes, a temperature of at least 80 °C for a period of at least 2 minutes, a temperature of at least 85 °C for a period of at least 5 minutes, or a temperature of at least 93 °C for a period of at least 1 minute as compared with a structure of the same composition, components and configuration but without the photoinitiator, the irradiation or both and exposed to the same temperature for the same time period.

16. A method of cooking a food product comprising:
a) substantially completely surrounding the food product in the structure of any of Claims 1-13 to form a packaged food product; and
b) subjecting the packaged food product to an elevated temperature sufficient to cook the food product.

17. The use of a composition comprising at least one olefin unsaturated ester copolymer and at least one photoinitiator as a tie layer directly between a first component and a second component, which components have an adhesion strength before irradiation of less than 40 N/m, treated by UV irradiation, wherein the effect of the photoinitiator and irradiation is shown by at least one of (a) the components in the presence of the tie layer have an adhesion strength measured according to ASTM F904-98 at 93 °C of at least 50 N/m after the structure has been irradiated with UV radiation, as compared with an adhesion strength of less than 40 N/m before irradiation or (b) the first and second components separated by the tie layer after irradiation exhibit at least 50 percent fewer spontaneous delamination failures after commercial processing which involves exposure to at least one of: a temperature of at least 65 °C for a period of at least 5 minutes, a temperature of at least 80 °C for a period of at least 2 minutes, a temperature of at least 85 °C for a period of at least 5 minutes, or a temperature of at least 93 °C for a period of at least 1 minute as compared with a structure of the same composition, components and configuration but without the photoinitiator, the irradiation or both and exposed to the same temperature for the same time period.

## Patentansprüche

1. Eine Mehrkomponentenstruktur, beinhaltend mindestens zwei Komponenten, eine erste und eine zweite Komponente mit einer direkt zwischen ihnen liegenden Bindeschicht, wobei die Bindeschicht mindestens ein olefinungesättigtes Ester-Copolymer und mindestens einen Photoinitiator beinhaltet, wobei mindestens die erste Komponente eine Mehrheit von einem Vinylidenchloridpolymer oder einer Kombination von Vinylidenchloridpolymeren (im Folgenden PVDC-Komponente) umfasst, wobei die Struktur eine erhöhte Zwischenschicht-Haftfestigkeit aufweist, die gemäß ASTM F904-98 bei 93 °C nach Bestrahlung mit UV-Strahlung, im Vergleich zu der Zwischenschicht-Haftfestigkeit vor der Behandlung mit der UV-Strahlung, gemessen wird.

2. Struktur gemäß Anspruch 1 in Form eines mehrschichtigen Films.

3. Struktur gemäß Anspruch 1, wobei mindestens eine zweite Komponente mindestens ein Polymer, Glas, Siliciumdioxid, Papier, Metall, Gewebe oder eine Kombination davon beinhaltet.

4. Struktur gemäß Anspruch 1, wobei die zweite Komponente ein Polymer, das ausgewählt ist aus mindestens einem Vinylidenchloridpolymer, das aus der gleichen oder einer anderen Zusammensetzung der ersten Komponente oder Schicht sein kann, oder mindestens ein Polymer, das ausgewählt ist aus Polyolefinen, Polyestern, Polyamiden und Polycarbonaten, Polyethylen (PE), Polyethylen mittlerer Dichte (MDPE), Polyethylen hoher Dichte (HDPE), Polyethylen niedriger Dichte (LDPE), weißem LDPE, linearem Polyethylen niedriger Dichte (LLDPE), Polyethylen sehr niedriger Dichte (VLDPE), Polypropylen (PP), Propylen-Ethylen-Copolymer (PPE), Nylon, Ethylen-Vinylacetat (EVA), wobei EVA einen VA-Gehalt von 12-35 Gewichtsprozent aufweist, Ethylen-Methylacrylat-Copolymer (EMA), Ethylen-Ethylacrylat-Copolymer (EEA), schlagfestem Polystyrol (HIPS), Polyvinylchlorid (PVC), Ethylenbutencopolymer (EB), Maleinsäureanhydrid modifizierten Polyolefinen (wobei "Polyolefine" EVA umfasst), Polyethylenterephthalat (PET), Copolymeren aus PET oder einem lonomer oder einer Kombination davon, beinhaltet.

5. Struktur gemäß Anspruch 1, wobei das olefinungesättigte Ester-Copolymer mindestens ein Ethylen/Ethylacrylat-Copolymer oder mindestens ein Ethylen/Methylacrylat beinhaltet.

6. Struktur gemäß Anspruch 1, wobei das olefinungesättigte Ester-Copolymer mindestens zwei olefinungesättigte Ester-Copolymere beinhaltet.

7. Struktur gemäß Anspruch 6, wobei mindestens zwei olefinungesättigte Ester-Copolymere das gleiche Olefin und ungesättigte Ester-Copolymere des gleichen Typs beinhalten, d. h. ungesättigte Ester mit ungesättigten Säure-Einheiten oder mit ungesättigten Alkohol-Einheiten, die sich im Schmelzindex um mindestens 1 g/10 min unterscheiden.

8. Struktur gemäß Anspruch 1, wobei der Photoinitiator ausgewählt ist aus der Gruppe, bestehend aus aromatischen Ketonen, aromatischen Monoacetalen von 1,2-Diketonen, aromatischen α-Hydroxyketonen, Chinonen, organischen Peroxiden, Azoverbindungen, Nitrosoverbindungen, Acylhalogeniden, Hydrozonen, Mercaptoverbindungen, Pyryliumverbindungen, Triacylimidazolen, Acylphosphinoxiden, Bisimidazolen, Chloralkyltriazinen, Benzoinethern, Benzylketalen, Thioxanthonen und Mischungen davon.

9. Struktur gemäß Anspruch 8, wobei der Photoinitiator ausgewählt ist aus aromatischen Ketonen, Monoacetalen von 1,2-Diketonen oder Mischungen davon.

10. Struktur gemäß Anspruch 1, wobei mindestens ein Vernetzungsverstärker vorhanden ist.

11. Struktur gemäß Anspruch 10, wobei der Vernetzungsverstärker ausgewählt ist aus der Gruppe, bestehend aus Triallylcyanurat, Triallylisocyanurat, Pentaerythrittriallylether, Pentaerythrittriacrylat, Pentaerythrittetraacrylat, Pentaerthritoltetramethacrylat, Dipentaerythritpentaacrylat, Ethylenglykoldiacrylat, Ethylenglykoldimethacrylat, Tetraethylenglycoldiacrylat, 1,4-Butandioldiacrylat, 1,4-Butandioldimethacrylat, 1,6-Hexandioldiacrylat, 1,6-Hexandioldimethacrylat, Methoxy-1,6-hexandiolpentaerythrittriacrylat, Trimethylolpropantriacrylat, Trimethylolpropantrimethacrylat, Diallylmaleat, Dipropargylmaleat, Dipropargylmonoallylcyanurat, Polymethacrylaturethanen, polymeren Epoxyacrylaten, Polyesteracrylatmonomeren und Oligomeren, Poly-n-butylenoxidglykoldiacrylaten und Bisphenol-A-Alkylenoxidadduktdiacrylaten und Kombinationen davon.

12. Struktur gemäß Anspruch 1, ferner beinhaltend eine zusätzliche Schicht oder Komponente, beinhaltend ein Polymer, das Mer-Einheiten, abgeleitet von mindestens einem Mitglied der Gruppe, bestehend aus C₂-C₁₂-α-Olefin, Styrol, Amid, Ester, Urethan (Isocyanaten, Amin oder Hydroxyl) und Kombinationen davon, beinhaltet.

13. Struktur gemäß Anspruch 1, die 3 bis 11 Komponenten oder Schichten aufweist.

14. Struktur gemäß einem der Ansprüche 1-13 in Form eines Films, einer Tasche, eines Beutels, eines Schlauchs, eines Gehäuses, eines ausgekleideten Rohres, eines coextrudierten Rohres, eines Blechs, eines Deckels, eines Pakets oder eines Behälters; eines Films, einer Tasche, eines Behälters oder eines Pakets, in dem/der gekocht werden kann, der/die heiß gefüllt werden kann oder der/die retortierbar ist; einer blasgeformten Struktur; oder einer Kombination davon.

15. Struktur gemäß einem der Ansprüche 1-13, wobei die Wirkung der Bestrahlung durch mindestens eines von Folgendem gezeigt wird: (a) die Komponenten in Anwesenheit der Bindeschicht weisen eine nach ASTM F904-98 gemessene Haftfestigkeit bei 93 °C von mindestens 50 N/m auf, nachdem die Struktur mit UV-Strahlung bestrahlt wurde, im Vergleich zu einer Haftfestigkeit von weniger als 40 N/m vor der Bestrahlung; (b) die Erhöhung der nach ASTM F904-98 gemessenen Haftfestigkeit bei 93 °C vor und nach der Bestrahlung beträgt mindestens 20 N/m oder 30 Prozent der Haftfestigkeit vor der Bestrahlung; oder (c) die nach der Bestrahlung durch die Bindeschicht getrennten ersten und zweiten Komponenten haben zu mindestens 50 Prozent weniger spontane Delaminierungsfehler nach der kommerziellen Verarbeitung, die das Aussetzen gegenüber mindestens einem von Folgendem mit sich bringt: einer Temperatur von mindestens 65 °C für einen Zeitraum von mindestens 5 Minuten, einer Temperatur von mindestens 80 °C für einen Zeitraum von mindestens 2 Minuten, einer Temperatur von mindestens 85 °C für einen Zeitraum von mindestens 5 Minuten oder einer Temperatur von mindestens 93 °C für einen Zeitraum von mindestens 1 Minute im Vergleich mit einer Struktur aus der gleichen Zusammensetzung, den gleichen Komponenten und der gleichen Konfiguration aber ohne den Photoinitiator, die Bestrahlung oder beide und ausgesetzt gegenüber der gleichen Temperatur für den gleichen Zeitraum.

16. Ein Verfahren zum Kochen eines Nahrungsmittelprodukts, das Folgendes beinhaltet:
a) im Wesentlichen vollständiges Umschließen des Nahrungsmittelprodukts in der Struktur gemäß einem der Ansprüche 1-13, um ein verpacktes Nahrungsmittelprodukt zu bilden; und
b) Aussetzen des verpackten Nahrungsmittelprodukts gegenüber einer erhöhten Temperatur, die ausreicht, um das Nahrungsmittelprodukt zu kochen.

17. Eine Verwendung einer Zusammensetzung, beinhaltend mindestens ein olefinungesättigtes Ester-Copolymer und mindestens einen Photoinitiator als eine Bindeschicht direkt zwischen einer ersten Komponente und einer zweiten Komponente, wobei die Komponenten eine Haftfestigkeit vor der Bestrahlung von weniger als 40 N/m, behandelt mit UV-Bestrahlung, aufweisen, wobei die Wirkung des Photoinitiators und der Bestrahlung durch mindestens eines von Folgendem gezeigt wird: (a) die Komponenten in Anwesenheit der Bindeschicht weisen eine nach ASTM F904-98 gemessene Haftfestigkeit bei 93 °C von mindestens 50 N/m auf, nachdem die Struktur mit UV-Strahlung bestrahlt wurde, im Vergleich zu einer Haftfestigkeit von weniger als 40 N/m vor der Bestrahlung oder (b) die nach der Bestrahlung durch die Bindeschicht getrennten ersten und zweiten Komponenten haben zu mindestens 50 Prozent weniger spontane Delaminierungsfehler nach der kommerziellen Verarbeitung, die das Aussetzen gegenüber mindestens einem von Folgendem mit sich bringt: einer Temperatur von mindestens 65 °C für einen Zeitraum von mindestens 5 Minuten, einer Temperatur von mindestens 80 °C für einen Zeitraum von mindestens 2 Minuten, einer Temperatur von mindestens 85 °C für einen Zeitraum von mindestens 5 Minuten oder einer Temperatur von mindestens 93 °C für einen Zeitraum von mindestens 1 Minute im Vergleich mit einer Struktur aus der gleichen Zusammensetzung, den gleichen Komponenten und der gleichen Konfiguration aber ohne den Photoinitiator, die Bestrahlung oder beide und ausgesetzt gegenüber der gleichen Temperatur für den gleichen Zeitraum.

## Revendications

1. Une structure multicomposant comprenant au moins deux composants, un premier et un deuxième composant, ayant une couche de liaison directement entre eux, la couche de liaison comprenant au moins un copolymère ester insaturé oléfine et au moins un photoamorceur, dans laquelle au moins le premier composant inclut une majorité d'un polymère chlorure de vinylidène ou une combinaison de polymères chlorure de vinylidène (ci-après appelé composant PVDC), la structure ayant une force d'adhésion inter-couche accrue mesurée selon l'ASTM F904-98 à 93 °C après irradiation avec un rayonnement UV par comparaison à la force d'adhésion inter-couche avant traitement avec le rayonnement UV.

2. La structure de la revendication 1 sous la forme d'un film multicouche.

3. La structure de la revendication 1 dans laquelle au moins un deuxième composant comprend au moins un polymère, du verre, de la silice, du papier, du métal, un tissu ou une combinaison de ceux-ci.

4. La structure de la revendication 1 dans laquelle le deuxième composant comprend un polymère sélectionné parmi au moins un polymère chlorure de vinylidène, lequel peut être de la même composition ou d'une composition différente de celle du premier composant ou de la première couche, ou au moins un polymère sélectionné parmi des polyoléfines, des polyesters, des polyamides, et des polycarbonates, du polyéthylène (PE), du polyéthylène moyenne densité (PEMD), du polyéthylène haute densité (PEHD), du polyéthylène basse densité (PEBD), du PEBD blanc, du polyéthylène basse densité linéaire (PELBD), du polyéthylène très basse densité (PETBD), du polypropylène (PP), un copolymère propylène éthylène (PPE), du nylon, de l'éthylène acétate de vinyle (EVA), de l'EVA ayant de 12 à 35 pour cent en poids de teneur en VA, un copolymère éthylène acrylate de méthyle (EMA), un copolymère éthylène acrylate d'éthyle (EEA), du polystyrène choc (PSC), du poly(chlorure de vinyle) (PVC), un copolymère éthylène butène (EB), des polyoléfines modifiées par anhydride maléique (« polyoléfines » incluant l'EVA), du poly(téréphtalate d'éthylène) (PET), des copolymères de PET, ou un ionomère, ou une combinaison de ceux-ci.

5. La structure de la revendication 1 dans laquelle le copolymère ester insaturé oléfine comprend au moins un copolymère éthylène/acrylate d'éthyle ou au moins un éthylène/acrylate de méthyle.

6. La structure de la revendication 1 dans laquelle le copolymère ester insaturé oléfine comprend au moins deux copolymères ester insaturés oléfine.

7. La structure de la revendication 6 dans laquelle au moins deux copolymères ester insaturés oléfine comprennent la même oléfine et des copolymères ester insaturés du même type, à savoir des esters insaturés ayant des groupements acides insaturés ou ayant des groupements alcool insaturés qui diffèrent dans l'indice de fluidité à chaud d'au moins 1 g/10 min.

8. La structure de la revendication 1 dans laquelle le photoamorceur est sélectionné dans le groupe constitué de cétones aromatiques, de monoacétals aromatiques de 1,2-dicétones, de cétones α-hydroxy aromatiques, de quinones, de peroxydes organiques, de composés azo, de composés nitrosés, d'halogénures d'acyle, d'hydrozones, de composés mercapto, de composés pyrylium, de triaclimidazoles, d'oxydes d'acylphosphine, de bisimidazoles, de chloroalkyltriazines, d'éthers benzoïne, de cétals benzyle, de thioxanthones, et de mélanges de ceux-ci.

9. La structure de la revendication 8 dans laquelle le photoamorceur est sélectionné parmi des cétones aromatiques, des monoacétals de 1,2-dicétones ou des mélanges de ceux-ci.

10. La structure de la revendication 1 dans laquelle au moins un stimulateur de réticulation est présent.

11. La structure de la revendication 10 dans laquelle le stimulateur de réticulation est sélectionné dans le groupe constitué de triallyl cyanurate, de triallyl isocyanurate, de pentaérythritol triallyl éther, de pentaérythritol triacrylate, de pentaérythritol tétraacrylate, de pentaérythritol tétraméthacrylate, de dipentaérythritol pentaacrylate, d'éthylène glycol diacrylate, d'éthylène glycol diméthacrylate, de tétraéthylène glycol diacrylate, de 1,4-butanediol diacrylate, de 1,4-butanediol diméthacrylate, de 1,6-hexanediol diacrylate, de 1,6-hexanediol diméthacrylate, de méthoxy-1,6-hexanediolpentaérythritol triacrylate, de triméthylolpropane triacrylate, de triméthylolpropane triméthacrylate, de diallyl maléate, de dipropargyl maléate, de dipropargyl monoallyl cyanurate, de polyméthacrylate uréthanes, d'époxy acrylates polymériques, de monomères et d'oligomères de polyester acrylate, de poly-n-butylèneoxyde glycol diacrylates, et de diacrylates d'adduit d'oxyde d'alkylène de bisphénol A et de combinaisons de ceux-ci.

12. La structure de la revendication 1 comprenant en outre une couche ou un composant supplémentaire comprenant un polymère comprenant des motifs monomères dérivés d'au moins un élément du groupe constitué d'α-oléfine en C₂-C₁₂, de styrène, d'amide, d'ester, d'uréthane (isocyanates, amine, ou hydroxyle), et de combinaisons de ceux-ci.

13. La structure de la revendication 1 qui a de 3 à 11 composants ou couches.

14. La structure de n'importe lesquelles des revendications 1 à 13 sous la forme d'un film, d'un sac, d'un sachet, d'un tube, d'un boîtier, d'une conduite à chemisage, d'une conduite coextrudée, d'une feuille, d'un matériau d'operculage, d'un emballage ou d'un récipient ; d'un film, sac, récipient ou emballage de cuisson, de remplissage à chaud, ou souple ; une structure moulée par soufflage ; ou une combinaison de ceux-ci.

15. La structure de n'importe lesquelles des revendications 1 à 13 dans laquelle l'effet d'irradiation est montrée par au moins un élément parmi (a) le fait que les composants en présence de la couche de liaison ont une force d'adhésion mesurée selon l'ASTM F904-98 à 93 °C d'au moins 50 N/m après que la structure a été irradiée avec un rayonnement UV, par comparaison à une force d'adhésion inférieure à 40 N/m avant irradiation ; (b) le fait que l'augmentation dans la force d'adhésion mesurée selon l'ASTM F904-98 à 93 °C avant et après irradiation est d'au moins 20 N/m ou 30 pour cent de la force d'adhésion avant irradiation ; ou (c) le fait que les premier et deuxième composants séparés par la couche de liaison après irradiation présentent au moins 50 pour cent en moins de ruptures par délaminage spontanées après traitement du commerce qui implique une exposition à au moins une température parmi : une température d'au moins 65 °C pendant une période d'au moins 5 minutes, une température d'au moins 80 °C pendant une période d'au moins 2 minutes, une température d'au moins 85 °C pendant une période d'au moins 5 minutes, ou une température d'au moins 93 °C pendant une période d'au moins 1 minute par comparaison à une structure de la même composition, des mêmes composants et de la même configuration mais sans photoamorceur, sans irradiation ou avec ni l'un ni l'autre et exposée à la même température pendant la même période de temps.

16. Une méthode de cuisson d'un produit alimentaire comprenant :
a) le fait d'entourer substantiellement complètement le produit alimentaire dans la structure de n'importe lesquelles des revendications 1 à 13 pour former un produit alimentaire emballé ; et
b) le fait de soumettre le produit alimentaire emballé à une température élevée suffisante pour cuire le produit alimentaire.

17. L'utilisation d'une composition comprenant au moins un copolymère ester insaturé oléfine et au moins un photoamorceur en tant que couche de liaison directement entre un premier composant et un deuxième composant, lesquels composants ont une force d'adhésion avant irradiation inférieure à 40 N/m, traités par irradiation UV, dans laquelle l'effet du photoamorceur et de l'irradiation est montré par au moins un élément parmi (a) le fait que les composants en présence de la couche de liaison ont une force d'adhésion mesurée selon l'ASTM F904-98 à 93 °C d'au moins 50 N/m après que la structure a été irradiée avec un rayonnement UV, par comparaison à une force d'adhésion inférieure à 40 N/m avant irradiation ou (b) le fait que les premier et deuxième composants séparés par la couche de liaison après irradiation présentent au moins 50 pour cent en moins de ruptures par délaminage spontanées après traitement du commerce qui implique une exposition à au moins une température parmi : une température d'au moins 65 °C pendant une période d'au moins 5 minutes, une température d'au moins 80 °C pendant une période d'au moins 2 minutes, une température d'au moins 85 °C pendant une période d'au moins 5 minutes, ou une température d'au moins 93 °C pendant une période d'au moins 1 minute par comparaison à une structure de la même composition, des mêmes composants et de la même configuration mais sans photoamorceur, sans irradiation ou avec ni l'un ni l'autre et exposée à la même température pendant la même période de temps.
